(19) Europäisches Patentamt / European Patent Office / Office européen des brevets

(11) **EP 3 108 216 B1**

(12) **EUROPÄISCHE PATENTSCHRIFT**

(45) Veröffentlichungstag und Bekanntmachung des Hinweises auf die Patenterteilung:
**30.08.2023   Patentblatt 2023/35**

(21) Anmeldenummer: **15709088.7**

(22) Anmeldetag: **17.02.2015**

(51) Internationale Patentklassifikation (IPC):
**G01J 3/10** *(2006.01)*       **G01J 3/433** *(2006.01)*
**G01J 3/02** *(2006.01)*       **G01J 3/28** *(2006.01)*
**G01B 11/25** *(2006.01)*

(52) Gemeinsame Patentklassifikation (CPC):
**G01J 3/2823; G01B 11/2509; G01B 11/2536; G01J 3/0229; G01J 3/10; G01J 3/4338**

(86) Internationale Anmeldenummer:
**PCT/EP2015/000344**

(87) Internationale Veröffentlichungsnummer:
**WO 2015/124288 (27.08.2015 Gazette 2015/34)**

(54) **VERFAHREN UND VORRICHTUNG ZUR HYPERSPEKTRALEN BILDGEBUNG**

METHOD AND DEVICE FOR HYPERSPECTRAL IMAGING

PROCÉDÉS ET DISPOSITIFS POUR L'IMAGERIE HYPERSPECTRALE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.02.2014   DE 102014002514**

(43) Veröffentlichungstag der Anmeldung:
**28.12.2016   Patentblatt 2016/52**

(73) Patentinhaber: **Universität Stuttgart**
**70174 Stuttgart (DE)**

(72) Erfinder:
 • **KÖRNER, Klaus**
  **70563 Stuttgart (DE)**
 • **OSTEN, Wolfgang**
  **70569 Stuttgart (DE)**
 • **BOETTCHER, Tobias**
  **71155 Altdorf (DE)**
 • **LYDA, Wolfram**
  **71229 Leonberg (DE)**
 • **GRONLE, Marc**
  **70567 Stuttgart (DE)**

(74) Vertreter: **Müller-Boré & Partner**
**Patentanwälte PartG mbB**
**Friedenheimer Brücke 21**
**80639 München (DE)**

(56) Entgegenhaltungen:
WO-A1-2010/060460       US-A- 6 031 609
US-A1- 2005 185 179     US-B2- 6 859 275

 • KHALED M DADESH ET AL: "High speed low noise multiplexed three color absorbance photometry", ENGINEERING IN MEDICINE AND BIOLOGY SOCIETY,EMBC, 2011 ANNUAL INTERNATIONAL CONFERENCE OF THE IEEE, IEEE, 30. August 2011 (2011-08-30), Seiten 39-42, XP032318598, DOI: 10.1109/IEMBS.2011.6089891 ISBN: 978-1-4244-4121-1

**Beschreibung**

Die vorliegende Erfindung betrifft Verfahren und Vorrichtungen zur Erzeugen von multi- oder hyperspektralem Beleuchtungslicht mit adressierbarem Spektrum, insbesondere zur (adaptiven) multi- oder hyperspektralen Bildgebung, zur Erfassung von strukturellen und/oder topographischen Informationen eines Objekts bzw. zur Erfassung des 2D- oder 3D-Profils eines Objekts oder zur Erfassung der Distanz zu einem Objekt mittels Spektroskopie.

DE 10 2006 007 172 B4 offenbart ein Verfahren und eine Vorrichtung zur schnellen, ortsaufgelösten, flächigen spektroskopischen Analyse und multispektralen Bildgebung. Die Vorrichtung umfasst ein gerastertes, flächiges Array von Mikrolinsen und jeweils den Foki der Mikrolinsen zugeordneten Pinholes, eine flächige Detektor-Matrix im Detektionsstrahlengang sowie Mittel zur lateralen spektralen Aufspaltung und zur Fokussierung des auf die flächige Detektor-Matrix einfallenden multispektralen Lichts, so dass auf der Detektor-Matrix eine spektrale Achse besteht. Das flächige Array ist um einen spitzen Winkel zur spektralen Achse geneigt auf der flächigen Detektor-Matrix angeordnet, wodurch eine optimale Nutzung der Fläche der Detektor-Matrix erzielt werden kann. Die Ortsauflösung dieses Verfahrens ist jedoch nicht optimal.

US 8,014,569 B2 offenbart ein Verfahren und eine Vorrichtung zur Nahrungsmittelkontrolle. Bei diesem Verfahren werden auf die Probe (Früchte, Gemüse oder sonstige Nahrungsmittel) mittels DMD-Applikation erzeugte Lichtmuster projiziert, die nachfolgend spektral mittels variabler Spektralfilter analysiert werden, um Informationen über den Zustand der Probe zu erhalten.

Der Fachartikel "Snapshot Hyperspectral Imaging in Ophthalmology" von W. R. Johnson u. a., veröffentlicht im Journal of Biomedical Optics Vol. 12 (1), 014036, 2007 offenbart eine Vorrichtung zur hyper-spektralen Bildgebung. Die spektralen Daten werden lediglich aus einem einzigen Kamerabild gewonnen, wodurch an die Graustufen-Auflösung der Kamera vergleichsweise hohe Anforderungen gestellt werden müssen, um eine akzeptable Farbauflösung erreichen zu können. Der in diesem Fachartikel dargestellte Ansatz kann daher in der fotometrischen Genauigkeit sehr limitiert sein.

Im Fachartikel "Development of a digital-micromirror-device-based multishot snapshot spectral imaging system" von Y. Wu u. a., veröffentlicht in Optics Letters, Vol. 36, No. 14, S. 2692 - 1694, 2011 wird ebenfalls ein Ansatz mit nur einem Kamerabild zum Spektralen Imaging mit Compressive Sensing (CS) dargestellt. Die dargestellten Ergebnisse weisen keine hohe fotometrische Genauigkeit auf, was prinzipbedingt ist, da nur ein Kamerabild verrechnet wird. Dennoch ist die erforderliche Rechenleistung, bezogen auf die Standard-PC-Technik im Jahr 2010 und ein typisches Farbobjekt, vergleichsweise hoch.

In der Veröffentlichung "Dispersive interferometric profilometer" von J. Schwider und L. Zhou veröffentlicht in Optics Letters, Vol. 19. No. 13, S. 995-997, 1994 wird ein interferometrisches System vorgeschlagen, das ein Zweistrahl-Interferometer und ein Spektrometer verknüpft. Das Interferenz-Signal wird dabei mit Hilfe eines Gitters spektral aufgespalten, so dass Müllersche Streifen entstehen. Eine flächenhafte Erfassung des Messobjekts ist nur durch eine Relativbewegung zwischen Spektrometer und Messobjekt zeitseriell erreichbar.

Im Fachartikel "Multi-frequency Light Source Using Spatial Light Modulator for profilometry", S. Choi u.a., veröffentlicht in den Tagungsunterlagen der Konferenz CLEO-PR 2013, WPF-15 wird eine Lichtquelle zur Erzeugung von spektralen Frequenzkämmen mit steuerbaren Wellenlängen und Frequenzabstand für die Spektral-Interferometrie oder die Frequenzkamminterferometrie. Hiermit kann schnell messende Spektral-Interferometrie betrieben werden, insbesondere dann, wenn a priori-Kenntnisse über die Größe des optischen Gangunterschieds im Spektral-Interferometer zumindest näherungsweise vorliegen, beispielsweise bei nahezu ebenen, kleinen Objekten oder einer dünnen Schicht als Messobjekt, und dieser optische Gangunterschied auf den eher mikroskopischen Bereich begrenzt ist. Die vorgeschlagene Lichtquelle ist jedoch für das hyperspektrale Imaging oder dreidimensional messende Verfahren - wie die chromatisch-konfokale Technik - nicht oder nur bedingt einsetzbar.

Ferner sind Verfahren und entsprechende Vorrichtungen zur multi-spektralen oder hyperspektralen Bildgebung aus dem Stand der Technik bekannt, welche durchstimmbare Lichtquellen (so genannten "swept sources") einsetzen. Diese Verfahren und Vorrichtungen sind jedoch sehr langsam und nicht zur "Echtzeit"-Bildgebung bzw. Messung geeignet. Im Fachartikel "Simultaneous three-dimensional step-height measurement and high resolution tomographic imaging with a spectral interferometric microscope" von D. Mehta u.a. in Applied Optics, Vol. 41, Nr. 19, S. 3874-3885, 2002 wird eine durchstimmbare Lichtquelle mit Fabry-Perot-Interferometern auf der Basis eines Flüssigkeitskristalls beschrieben, welche in der Regel nur quasi-monochromatisches Licht liefert.

Ein weiterer Nachteil der aus dem Stand der Technik bekannten Verfahren und Vorrichtungen zur multi- oder hyperspektralen Bildgebung ist das reduzierte Signal/Rausch Verhältnis, da nicht alle Spektralanteile bzw. Spektralkomponente gleichzeitig im optischen und/oder Daten-Eingriff mit dem abgebildeten oder untersuchten Objekt sind. Darüber hinaus weisen diese Verfahren eine mangelnde Flexibilität der Wahl der Parameter der hyperspektralen Analyse auf.

US 6 031 609 A1 beschreibt ein Fourier-Transformations-Spektrometer mit einem ferroelektrischen Flüssigkristallmodulator. Jede spektrale Komponente wird mit einem entsprechenden Trägersignal kodiert. Das resultierende Licht wird spektral rekombiniert und auf einen Photomultiplier abgebildet, wobei die resultierenden Trägerfrequenzen (und deren Amplituden) durch Fourier-Transformation des zeitlich veränderlichen Signals ermittelt werden.

Der Fachartikel K. Dadesh, et al. "High Speed Low Noise Multiplexed Three Color Absorbance Photometrie", 33rd Annual International Conference of the IEEE EMBS, Boston Massachusetts US, August 30 - September 3, 2011, Seiten 39 bis 42, beschreibt eine Vorrichtung zur dreifarbigen Absorptionsphotometrie. Die einzelnen Farben werden mit unterschiedlichen Frequenzen moduliert, wobei die Modulationsfrequenzen so gewählt werden, dass deren Fourierspektren nicht überlappen. Das durch eine Probe transmittierte Licht aller drei modulierten Farben wird detektiert und anschließend analysiert.

US 6 859 275 B2 beschreibt eine Vorrichtung mit einer Strahlungsquelle, einer Wellenlängendispersionsvorrichtung und einem zweidimensionalen räumlichen Lichtmodulator. Die spektralen Komponenten aus einer Probe werden in Raum verteilt und getrennt und unterschiedlich moduliert. Die so kodierten spektralen Komponenten können dann nachgewiesen und analysiert werden.

WO 2010/060460 A1 beschreibt eine Vorrichtung zur multispektralen und räumlichen Formung eines Eingangspulses. Die Vorrichtung umfasst eine erste Einrichtung zum räumlichen Aufspalten eines Eingangsstrahls in einer Mehrzahl von Sub-Strahlen mit unterschiedlichen Wellenlängen, eine zweite Einrichtung zum unabhängigen Modulieren jeder der Sub-Strahlen, und ein drittes Mittel zum Rekombinieren der modulierten Sub-Strahlen.

US 2005/185179 A1 beschreibt ein Fourier Transform (FT) Spektrometer mit einem räumlichen Lichtmodulator des Typs MEMS ("Micro-Electro-Mechanical-Systems") oder D-MEMS ("Diffractive Micro-Electro-Mechanical-Systems"). Der räumliche Lichtmodulator kodiert jede spektrale Komponente einer polychromatischen Lichtquelle mit unterschiedlicher zeitlicher Modulation. Die kodierten spektralen Komponenten werden spektral in einem Strahl rekombiniert, der anschließend in einem Objektstrahl und einem Referenzstrahl aufgeteilt wird.

Eine Aufgabe der vorliegenden Erfindung ist es, verbesserte Verfahren und Vorrichtungen zur multi- oder hyperspektralen Bildgebung, zur Erfassung von strukturellen und topographischen Informationen eines Objekts oder des Abstands zu einem Objekt mittels Spektroskopie oder zur spektralen Modulation von Strahlung über Raum und Zeit mit Dynamik-Reduktion bereitzustellen. Insbesondere ist eine Aufgabe der Erfindung, vollflächig multi- oder hyperspektrale Informationen eines Objekts zu erhalten, wobei die Ortsauflösung und/oder das Signal-Rausch Verhältnis und/oder die Geschwindigkeit der Informationserfassung verbessert werden.

Diese Aufgaben werden durch eine multi- oder hyperspektrale Bildgebungsvorrichtung, eine multi- oder hyperspektrale Messvorrichtung und ein Verfahren zur multi- oder hyperspektralen Bildgebung nach den unabhängigen Ansprüchen gelöst. Bevorzugte Ausführungsformen sind Gegenstand der Unteransprüche.

Gemäß einem ersten Aspekt der Erfindung wird eine Vorrichtung zur multi- oder hyperspektralen Bildgebung vorgeschlagen. Die Vorrichtung zur multi- oder hyperspektralen Bildgebung umfasst eine Beleuchtungsvorrichtung zum Erzeugen von multi- oder hyperspektralem Beleuchtungslicht mit adressierbarem Spektrum. Die Beleuchtungsvorrichtung umfasst eine multispektrale Lichtquelle und eine Modulationseinrichtung, welche ausgelegt ist, die einzelnen Spektralkomponenten des von der multispektralen Lichtquelle emittierten Licht zeitlich zu modulieren, wobei die zeitlichen Modulationen der einzelnen Spektralkomponenten voneinander unterschiedlich sind. Insbesondere werden die einzelnen Spektralkomponenten mit jeweils voneinander unterschiedlichen Modulationsfrequenzen, Modulationsfrequenzbereichen und/oder Modulationssequenzen moduliert.

Die multispektrale Lichtquelle kann

(i) zumindest eine Lichtquelle mit einem kontinuierlichen, quasi-kontinuierlichen oder Frequenzkamm-Spektrum und (erste) wellenlängen-dispersiven Mitteln zur spektralen Aufspaltung des von der Lichtquelle emittierten Lichts in mehrere, räumlich voneinander getrennte Spektralkomponenten mit jeweils voneinander unterschiedlichen Wellenlängen $\lambda_1, \lambda_2, ... , \lambda_n$ oder Wellenlängenbändern umfassen; oder

(ii) ein Ensemble oder ein Array von räumlich voneinander getrennten monochromatischen oder quasi-monochromatischen Quellen umfassen, welche ausgelegt sind, Licht mit vorbestimmten, voneinander jeweils verschiedenen Emissions-Wellenlängen $\lambda_1, \lambda_2, ... , \lambda_n$ oder Emissions-Wellenlängenbändern zu emittieren.

Die Modulationseinrichtung kann dementsprechend

(i) mindestens einen elektrisch steuerbaren, räumlichen Lichtmodulator, welches ausgelegt ist, die einzelnen Spektralkomponenten zeitlich zu modulieren; oder

(ii) mehrere, der einzelnen monochromatischen quasi-monochromatischen Lichtquellen zugeordnete elektronische Ansteuermodulen umfassen.

Die Beleuchtungsvorrichtung umfasst ferner optische Mittel, welche ausgelegt sind, die einzelnen, modulierten Spektralkomponenten zusammenzusetzen, so dass diese im Wesentlichen räumlich miteinander überlappen, um das multi- oder hyperspektrale Beleuchtungslicht zu bilden. Die optische Mittel können (zweite) wellenlängen-dispersive Mittel (z.B. Beugungsgitter, Prismen, etc.) umfassen. Die zweiten wellenlängen-dispersiven Mittel sind ausgelegt, die räumliche Trennung der einzelnen Spektralkomponente bzw. den Winkelunterschied der einzelnen Spektralkomponente zu kompensieren. Die Modulationsvorrichtung ist ferner ausgelegt, die Startphasen der Modulationen der einzelnen Spektralkomponenten bezogen auf einem Startzeitpunkt der Beleuchtung des gerasterten Detektors (32) stetig fallend oder stetig steigend festzulegen.

Das erzeugte multispektrale Licht mit adressiertem Spektrum kann für eine Vielzahl von Anwendungen eingesetzt werden, insbesondere für medizinische oder messtechnische Anwendungen. Unter dem Begriff "Licht" wird im Sinne der vorliegenden Anmeldung jede elektromagnetische Strahlung verstanden, z.B. jede elektromagnetische Strahlung im sichtbaren Spektralbereich (VIS), ultravioletten Spektralbereich (insbesondere im extremen (EUV), starken (DUV) oder schwachem (UV) Ultraviolett), infraroten Spektralbereich (insbesondere im nahem (NIR), mittlerem (MIR) oder fernem (FIR) Infrarot), Tera-Hz Spektralbereich und/oder Röntgenbereich.

Die multispektrale Lichtquelle kann zumindest eine Lichtquelle mit einem kontinuierlichen, quasi-kontinuierlichen Spektrum oder einem Frequenzkamm-Spektrum und wellenlängen-dispersiven Mitteln umfassen. Die Lichtquelle kann z.B. ein Linien- oder Punktstrahler sein, z.B. zumindest eine Leuchtdiode ("**L**ight **E**mitting **D**iode" (LED)), eine Weißlichtdiode, eine Lumineszenzdiode (z.B. "**S**uper **L**iminescent **D**iode" (SLD)), etc. Die Lichtquelle kann ebenfalls eine Lichtquelle mit quasi-kontinuierlichem Spektrum sein, z.B. eine Lichtquelle, die mehrere Einzelquellen mit unterschiedlichen, räumlich miteinander überlappenden Spektrallinien bzw. Spektralbereiche umfasst. Die Lichtquelle kann ferner zumindest einen Frequenzkammlaser oder eine Superlumineszenz-Diode (SLD) mit nachgeordnetem Fabri-Pérot Interferometer (FPI) umfassen. Die Quelle elektromagnetischer Strahlung, insbesondere für den mittleren Infrarot-Bereich, kann als Synchrotron-Strahlungsquelle ausgebildet sein.

Mit Hilfe von wellenlängen-dispersiven Mitteln können die einzelnen Spektralkomponenten räumlich voneinander getrennt werden. Die wellenlängen-dispersiven Mitteln sind vorzugsweise so ausgelegt und angeordnet, dass das von der Lichtquelle emittierte Licht derart spektral aufgespalten wird, dass die einzelnen Spektralkomponenten mit voneinander unterschiedlichen Wellenlängen oder Wellenlängenbereiche in einem vorgegebenen flächigen oder räumlichen Bereich (z.B. in einer vorgegebenen Ebene) räumlich voneinander getrennt sind. In diesem räumlichen Bereich besteht mindestens eine laterale Wellenlängen-Achse bzw. Spektralachse oder ein vorbestimmter, lateral strukturierter Bereich von Intensitäten mit unterschiedlichen Wellenlängen. Diese letztgenannten Spektralbereiche können im Wesentlichen senkrecht zu der Wellenlängenachse angeordnet sein. Die wellenlängen-dispersiven Mittel können z.B. Beugungsgitter, Prismen, Fabri-Perot Interferometer, etc. sein.

In dem flächigen oder räumlichen Bereich kann zumindest einen elektrisch steuerbaren, räumlichen Lichtmodulator angeordnet sein. Der räumliche Lichtmodulator (Spatial Light Modular (SLM)) ist ausgelegt, eine zeitliche Modulation der einzelnen, voneinander räumlich getrennten Spektralbereiche durchzuführen. So kann beispielsweise lateral (entlang der Wellenachse) eine unterschiedliche zeitliche Modulation der einzelnen Spektralberieche bzw. Spektralkomponente durch eine Änderung des Grads der Reflexion und/oder Grads der Transmission und/oder des Grads der Absorption des elektrisch steuerbaren räumlichen Lichtmodulators mit einer vorbestimmt gesteuerten zeitlichen Modulation (periodisch oder aperiodisch) erzieht werden. Anders ausgedrückt erfolgt mittels einer räumlich-zeitlichen Modulation bzw. Steuerung des räumlichen Lichtmodulators eine zeitliche Modulation der räumlich voneinander getrennten, unterschiedlichen Spektralbereiche.

Der Begriff "räumlicher Lichtmodulator" umfasst dabei jegliche räumliche Modulatoren, einschließlich räumliche Lichtmodulatoren für Licht im sichtbaren, infraroten, ultravioletten oder Terahertz Bereich. Der räumliche Lichtmodulator kann z.B. den Grad der Reflexion und/oder den Grad der Transmission und/oder den Grad der Absorption des einfallenden Lichts modulieren. Beispiele geeigneter räumlicher Lichtmodulatoren sind z.B. DMD ("**D**igital Mirror Device"), LCD ("**L**iquid **C**rystal **D**isplay", LCoS ("Liquid Crystal on Silicon"). Vorzugsweise wird als räumlicher Lichtmodulator ein DMD eingesetzt. DMDs weisen eine sehr gute Lichteffizienz hinsichtlich der Licht-modulierenden Elemente auf, welche besser ist, als bei einer Anwendung des DMDs als Amplituden-Beugungsgitter.

Multispektrales Licht mit mehreren, räumlich voneinander getrennten Spektralkomponenten kann auch mittels eines Ensembles oder eines Arrays von monochromatischen oder quasi- monochromatischen, diskreten, räumlich voneinander getrennt angeordneten Lichtquellen erzeugt werden. Die einzelnen Lichtquellen in dem Ensemble oder Array sind ausgelegt, Licht bzw. Lichtstrahlen mit voneinander jeweils verschiedenen Emissions-Wellenlängen $\lambda_1$, $\lambda_2$, ..., $\lambda_n$ oder Emissions-Wellenlängenbänder zu emittieren. Die einzelnen diskreten Lichtquellen können direkt mittels elektronischen Ansteuermodulen, welche jeweils den einzelnen Lichtquellen zugeordneten sind, angesteuert werden, um die Intensität der einzelnen Emissions-Wellenlängen oder Emmisionswellenlängenbänder zeitlich zu modulieren. In diesem Fall kann die multispektrale Lichtquelle ein Ensemble oder Array von Leuchtdioden (LEDs), Superlumineszenz-Dioden (SLDs), Laserdioden, etc. umfassen, die jeweils Licht mit einer vorbestimmten Wellenlänge oder Licht in einem vorbestimmten, engen Spektralbereich emittieren.

Die Anzahl der Spektralkomponente kann je nach Zielanwendung der Beleuchtungsvorrichtung gewählt werden. Bei einer Anwendung der Beleuchtungsvorrichtung in einer Messvorrichtung zur Detektion des 2-D oder 3-D Profils eines Objekts und/oder des Abstands zu einem Objekt kann die Anzahl der einzelnen Spektralkomponenten bzw. der Abstand der einzelnen Spektrallinien vorzugsweise so gewählt werden, dass jede Spektrallinie bzw. jede Spektralkomponente eine eigene Tiefe im Objektraum adressiert bzw. entspricht.

Die Vorrichtung zum Erzeugen von multi- oder hyperspektralem Beleuchtungslicht mit adressierbarem Spektrum kann ferner Mittel umfassen, die ausgelegt sind, das von der Lichtquelle mit dem kontinuierlichen, quasi-kontinuierlichen oder Frequenzkamm-Spektrum emittierte Licht oder das von den einzelnen monochromatischen oder quasi-monochromatischen Lichtquellen emittierte Licht spektral zu filtern. Die Mittel zum selektiven Spektralfiltern können ausgelegt sein, einzelne Spektralkomponente und/oder Spektralbereiche aus einem breiten Spektralbereich selektiv herauszufiltern bzw. abzuschalten. Die Mittel zum selektiven Spektralfiltern können ein oder mehrere feste oder elektrisch steuerbare Spektralfilter und/oder Lichtfallen und/oder Absorber und/oder andere optische Komponenten umfassen.

Die Mittel zum selektiven Spektralfiltern können der Lichtquelle mit dem kontinuierlichen, quasi-kontinuierlichen oder Frequenzkamm-Spektrum oder den einzelnen monochromatischen oder quasimonochromatischen Lichtquellen nachgeschaltet werden. Es ist ebenfalls möglich, die Mittel zur selektiven Spektralfilterung in dem räumlichen Lichtmodulator oder in den elektronischen Ansteuermodulen zu integrieren (z.B. als Teil der Steuerung).

Insbesondere kann der räumliche Lichtmodulator ausgelegt sein, eine selektive Einstellung bzw. ein selektives Filtern des Spektralbereichs der kontinuierlichen, quasi-kontinuierlichen oder Frequenzkammlichtquelle durchzuführen. So kann der räumliche Lichtmodulator ausgelegt sein, einzelne Spektralkomponenten und/oder Spektralbereiche herauszufiltern bzw. zu blockieren (z.B. durch Ablenkung in Richtung einer Lichtfalle). In einem Beispiel kann der räumliche Lichtmodulator als variabler (z.B. relativ schmalbandiger) spektraler Filter dienen.

Durch das spektrale Filtern des Spektralbereichs kann eine gezielte Anpassung des multispektralen Beleuchtungslichts an die jeweilige Anwendung vorgenommen werden. Dies ist insbesondere bei medizinischen Anwendungen von Vorteil, in denen Untersuchungen an lebenden Objekten vorgenommen werden. Da das multispektrale Licht genau auf das zu beleuchtende bzw. zu untersuchende Objekt abgestimmt werden kann, ist es möglich, eine unnötige Strahlenbelastung des beleuchteten Objekts, welche z.B. zu Gewebeschädigungen führen kann, zu vermeiden oder zu minimieren, insbesondere wenn als Lichtquelle eine Synchrotronlichtquelle oder eine andere Quelle potentiell schädlicher oder belastender elektromagnetischer Strahlung verwendet wird. Bei herkömmlichen Ansätzen zur Spektralmessung, insbesondere im MIR Bereich, wird dagegen ein möglichst volles Spektrum zur Beleuchtung verwendet, um jeden möglichen spektralen Effekt zu erkennen.

In einem Beispiel werden mit Hilfe der Mittel zum selektiven Spektralfiltern die zur Anwendung kommenden Spektralverteilungen vorbestimmt bzw. gezielt ausgedünnt. So können die Spektralanteile, die mit hoher Sicherheit keine Krebsmarker oder andere relevante Marker adressieren und nicht zur Informationsgewinnung beitragen, ausgeblendet bzw. herausgefiltert werden. Dies hat den Vorteil, dass die Strahlungsbelastung (z.B. im Falle einer Infrarotstrahlungsquelle die Wärmelast, die durch starke Wasserabsorption im Gewebe erzeugt wird) auf das beleuchtete Objekt (z.B. ein Organ) reduziert wird. Ferner kann die Strahlungsenergie in den Spektralbereichen, wo spektrale I<rebsmarker oder andere relevante Marker vorhanden sind, erhöht werden. Dadurch kann ein höheres Signal-Rausch-Verhältnis des Messsignals bzw. der ermittelten spektralen Information erreicht werden, was zu einer Verbesserung der Geschwindigkeit und der Zuverlässigkeit der Messung bzw. der Bildgebung führt. Da ferner die detektierten Signale, die verarbeitet werden, um Informationen über das beleuchtete Objekt zu erhalten, einen geringeren Anteil von Spektralkomponenten enthalten, kann die Geschwindigkeit der Messung bzw. der Bildgebung ebenfalls erhöht werden.

Des Weiteren ist es möglich, eine Frequenzspreizung im Signalraum des räumlichen Lichtmodulators und/oder eines Detektors und/oder einer digitalen Signalbearbeitungsvorrichtung durchzuführen. Die Spreizung im Frequenzbereich der Modulationen kann dabei größer sein als im Bereich der physikalischen Wellenzahlen.

So können nacheinander mehrere unterschiedliche Schmalbanden-Signaturen (z.B. I<rebsmarker-Schmalbanden-Signaturen) adressiert werden (z.B. nicht 30 potenzielle Schmalbanden auf einmal, sondern z.B. 3x5 unterschiedlichen Schmalbanden). Mit diesen mittels SLMs-Elementen adressierten Schmalbanden bzw. Spektralkomponenten wird - wie nachfolgend beschrieben - eine "Quasi-Frequenzspreizung" im niederfrequenten Frequenzbereich der elektrischen/digitalen Signalverarbeitung mittels der SLM-Elemente-Ansteuerung durchgeführt. Somit ist es möglich, die gegebenen Signalverarbeitungs- und Signalübertragungs-Kapazitäten des Systems und der Komponenten optimal auszunutzen. Die physikalische Wellenlänge/Wellenzahl der Schmalbanden-Strahlung bleibt dabei unverändert. Nur im Signalraum von SLM, Detektor und digitaler Datenverarbeitung erfolgt eine niederfrequente Frequenzspreizung - typischerweise weit unterhalb von 10 I<Hz. Es ist ebenfalls möglich, eine Frequenz-Dehnung vorzusehen, um eine optimale Nutzung der Signalübertragung und Signalauswertung beim Einsatz von bekannten Komponenten und Systemen zu erreichen.

Der vorgeschlagene Ansatz des selektiven Filterns einzelner Spektralbereiche und/oder Spektralkomponenten und der Frequenzspreizung kann unabhängig von der oben beschriebenen zeitlichen Modulation der einzelnen Spektralkomponenten zum Einsatz kommen. Ein solcher Ansatz ist insbesondere bei einer Verwendung der Beleuchtungsvorrichtung im medizinischen Bereich zur Beleuchtung von lebenden Objekten von Vorteil (z.B. im Rahmen einer therapeutischen Maßnahme, wie z.B. einer chirurgischen Operation), wo es nur auf die notwendigen Infos für den Chirurgen (das Gewebe wegschneiden ja / nein) mit hoher Zuverlässigkeit und in der benötigten Geschwindigkeit ankommt (max. wenige Minuten, z.B. weniger als 20 Minuten für die Gesamt-Zeit aller Diagnose-Maßnahme in einer chirurgischen Operation).

Der vorgeschlagene Ansatz des selektiven Filterns einzelner Spektralbereiche und/oder Spektralkomponenten und der Frequenzspreizung (nachfolgend auch selektive spektrale Frequenzspreizung oder selektive Frequenzspreizung genannt) ist insbesondere von Vorteil, wenn als Quelle eine brillante Quelle hoher räumlicher Kohärenz, insbesondere auch im mittleren Infrarotbereich (MIR) verwendet wird. Beispiele solcher Quellen sind z.B. Synchrotron-Strahlungsquellen, die über eine äußerst energiereiche, brillante Strahlung, insbesondere auch im mittleren Infrarot (MIR), verfügen, oder Laser-Batterien von spektral fein abgestimmten Lasern, welche insbesondere auch im mittleren Infrarot (MIR) abstrahlen.

In einem Beispiel wird die Strahlung der brillanten Quelle hoher räumlicher Kohärenz sehr fein spektral zerlegt, beispielsweise mit einer Vorrichtung zur spektralen Zerlegung von elektromagnetischer Strahlung (z.B. mit einem hochauflösendem Gitter-Spektrometer) im MIR. Mit geeigneten Mitteln werden bestimmte Spektralbereiche, die zur Informationsgewinnung beitragen ausgewählt, z.B. Spektralbereiche, die bekannte Krebsmarker adressieren. Jeder Spektralbereich kann mehrere einzelne Spektralkomponenten (z.B. in Form von schmalen Spektral-Banden) umfassen. Die nicht ausgewählten Spektralkomponenten und/oder Spektral-Bereiche können mittels geeigneter Mittel zum spektralen Filtern herausgefiltert und von Propagation in Richtung des Objekts bestmöglich ausgeschlossen werden. So können die nicht ausgewählten Spektralkomponenten und/oder Spektralbereiche in Lichtfallen gelenkt oder "dunkelgeschaltet" werden.

Jedem der ausgewählten Bereiche kann je ein räumlicher Lichtmodulator zugeordnet werden, der vorzugsweise für das MIR optimiert ist. Die räumlichen Lichtmodulatoren sind i.d.R. in der Fläche (Ebene) der spektralen Aufspaltung der Vorrichtung zur spektralen Zerlegung von elektromagnetischer Strahlung räumlich voneinander getrennt. Alternativ können räumlich voneinander getrennte Bereiche eines einzigen räumlichen Lichtmodulators verwendet werden. Die Beleuchtungsvorrichtung kann optische Mittel umfassen, die ausgelegt sind, das Licht von den räumlich getrennten Spektralbereichen auf die unterschiedlichen Bereiche des räumlichen Lichtmodulators abzulenken bzw. abzubilden.

Die spektrale Zerlegung (Auflösungsvermögen) der Vorrichtung zur spektralen Zerlegung von elektromagnetischer Strahlung kann so gewählt werden, dass jede Spektralkomponente ihr eigenes harmonisch oszillierendes Element des räumlichen Lichtmodulators eindeutig zugewiesen werden kann. Alternativ kann jeder Spektralkomponente eine Gruppe von Elementen des räumlichen Lichtmodulators zugewiesen werden. Jede Spektralkomponente wird durch das ihr zugewiesene Element bzw. durch die ihre zugewiesene Gruppe von Elementen des räumlichen Lichtmodulators mit der dem Element zugewiesenen Frequenz moduliert. Die Spreizung im Frequenzbereich der Modulationen kann folglich sehr viel größer sein als im Bereich der physikalischen Wellenzahlen.

Das untersuchte Objekt (z.B. ein Organ eines Patienten in einer chirurgischen Operation) wird mit der adressierten multispektralen Strahlung bestrahlt. Das bestrahlte Objekt wird mittels eines Detektors, der vorzugsweise für das MIR ausgelegt ist, beobachtet. Mittels Frequenzanalyse des detektierten Signals (z.B. eine Lock-in-Detektion) können Informationen über das untersuchte Objekt erhalten werden.

Durch die gezielte Auswahl und Adressierung bestimmter Spektralbereiche und/oder Spektralkomponente ist es möglich, das Signal-Rausch-Verhältnis zu verbessern und die Signalverarbeitungszeit zu verringern. Ferner kann die Strahlungsbelastung des beleuchteten Objekts verringert werden, da lediglich ein relativ kleiner, zur Informationsgewinnung beitragender Anteil der Strahlung der Quelle das Objekt erreicht. Die brillante Quelle kann dabei unter "Volllast" laufen.

Ein anderer Ansatz stellt das zeitsequentielle Wellenlängen-Durchstimmen mittels SLM in einer Vorrichtung zur hochaufgelösten spektralen Zerlegung dar. Es kommt dann nur eine einzige Schmalband-Strahlung bzw. eine einzige Spektralkomponente zur Anwendung. Da dieser Ansatz eine besonders hohe Brillanz der Strahlung erfordert, ist in der Regel dieser Ansatz dem Ansatz mit mehreren Schmalband-Linien bzw. mit mehreren Spektralkomponenten hinsichtlich des erreichbaren Signal-Rausch-Verhältnisses unterlegen.

Vorzugsweise weist die Lichtquelle bzw. die einzelnen monochromatischen oder quasi-monochromatischen Lichtquellen möglichst hoher Brillanz auf, wodurch die spektrale Auflösung verbessert wird.

Die zeitlichen Modulationen der einzelnen Spektralkomponenten können sich in deren Modulationsfrequenz, Modulationsfrequenzbereich, Modulationssequenz und/oder Startphasen der Modulationen unterscheiden. So können sich zeitlichen Modulationen der einzelnen Spektralkomponenten in deren Grundfrequenz oder in deren (vergleichsweise schmalen) Grundfrequenzbereich (wobei Oberwellen entstehen können) und/oder in deren Modulationssequenz unterscheiden.

Die zeitliche Modulation der einzelnen Spektralkomponenten kann periodisch oder aperiodisch sein, wobei auch Oberwellen entstehen können. Insbesondere können die einzelnen Spektralkomponenten mit harmonischen Oszillationen temporal moduliert werden, wobei die Modulationsfrequenzen in dem Bereich von unterhalb von 10 MHz, vorzugsweise in dem Bereich von 10 Hz bis 10 KHz liegen.

Die Modulation kann ein Frequenz-Chirping, d.h. eine zeitliche Veränderung der Modulationsfrequenz der vorzugsweise harmonischen Schwingungen bzw. Modulationen, umfassen. Dies kann z.B. durch eine zeitliche Veränderung der Modulationsfrequenz des SLMs oder der Modulationsfrequenz der einzelnen Ansteuermodule erzielt werden.

Die Modulationsvorrichtung ist ferner ausgelegt, die Startphasen der Modulationen der einzelnen Spektralkomponenten unterschiedlich festzulegen bzw. zu wählen bzw. zu variieren. Ferner kann die Modulationsvorrichtung ausgelegt sein, die Startphasen der Modulation der einzelnen Spektralkomponenten in dem von einem gerasterten Detektor erfassten Signal nichtlinear abzubilden. Die Variation der Startphasen kann von Modulationsfrequenz zu Modulationsfrequenz unterschiedlich sein und linear oder nichtlinear erfolgen. Vorzugsweise ist die Variation der Startphasen zeitlich unveränderlich.

Vorzugsweise erfolgt die Änderung der Startphasen nicht zufällig, sondern geordnet. So sind die Phasenänderungen (bezogen auf den Startzeitpunkt oder einen Referenzzeitpunkt) stetig fallend oder stetig steigend. Vorzugsweise sind die Phasenänderungen nichtlinear, vorzugsweise quadratisch von der Modulationsfrequenz abhängig. Vorzugsweise ändert sich der Betrag des Phasenwinkels dabei nur wenig. In diesem Fall strebt die zur Errechnung der Spektren bzw. zur Spektraldiskrimination erforderliche Rechenleistung am ehesten ein Minimum an. Ferner können optimale Ergebnisse erzielt werden, d.h. die errechneten Spektren weisen ein Fehlerminimum auf.

Ferner kann die Modulationsvorrichtung ausgelegt sein, die Amplituden der vorzugsweise harmonischen Modulationen der einzelnen Spektralkomponenten zeitlich zu verändern. Insbesondere kann die Modulationsvorrichtung ausgelegt sein, eine Apodisation durchzuführen, bei der die Amplituden in den harmonischen Schwingungen in der Regel nach dem Start der Modulation (z.B. nach dem Einsetzen der Schwingungen an den SLM-Elementen) vorzugsweise abnehmen.

Wie nachfolgend erläutert wird, ermöglichen die obigen Ansätze eine Reduktion der Anforderungen an die Dynamik des Detektors, da die registrierten Signale in der Regel geringere Mittensignale aufweisen.

Wird beispielsweise die Beleuchtungsvorrichtung in einer Vorrichtung zur multi- oder hyperspektralen Bildgebung zur Beleuchtung eines Objekts eingesetzt, so wird das Zeitsignal für jeden Bildpunkt pixelweise aus einem Bilderstapel der für eine bestimmte Zeit lang ausgelesenen Kamera gewonnen. Da es viele Bildpunkte gibt, werden entsprechend viele Zeitsignale erfasst. Insbesondere registrieren die Pixel der Kamera zu jedem Zeitpunkt stets ein Summen-Signal als Überlagerung aller einzelnen Signalschwingungen, die mittels räumlichen Lichtmodulator oder mittels Ansteuermodule erzeugt werden. Dabei wird einem physikalischen Wellenzahlband delta_kb_i, welches durch spektrale Zerlegung entstanden ist, jeweils eine eigene Frequenz f_i mittels einer speziellen Ansteuerung des räumlichen Lichtmodulators oder der Ansteuermodule zugeordnet, beispielsweise indem Licht eines Wellenzahlbandes delta_kb_i auf ein SLM-Element i trifft, das mit der Frequenz f_i rechnergesteuert oszilliert.

In der Zweistrahl-Interferometrie mit multispektralem Licht bedeutet der Chirp-Effekt, dass der optische Gangunterschied null für Strahlung verschiedener Wellenzahlen für unterschiedliche Referenzspiegel-Positionen erreicht wird. Dies bedeutet, dass es einen sich ändernden Phasengang über Wellenzahl k gibt, der sich im Zweistrahl-Interferogramm durch eine Frequenzveränderung bemerkbar macht. Diese Frequenzveränderung ist in einigen Fällen im Zweistrahl-Interferogramm deutlich sichtbar und wird als Chirping oder Chirp-Effekt bezeichnet. In der Infrarot-Fourier-Transformations-Spektroskopie wird der Phasengang über Wellenzahl k numerisch aus einem kurzen zweiseitigen Interferogramm durch eine FFT errechnet und zur Korrektur genutzt.

Gemäß einem Aspekt der Erfindung, wird jedoch bewusst ein vorbestimmter Phasengang zur Verringerung des Mittenpeaks im Summensignal (entspricht dem Interferogramm) eingeprägt. Dieser Phasengang ist somit *a priori* bekannt. Demzufolge kann die Phasenkorrektur bei der Spektrenberechnung mit dem *a priori* bekannten (vorbestimmten) Phasengang durchgeführt werden.

In einem bevorzugten Beispiel wird ein Signal mit Chirp-Effekt (=gechirptes Signal) im Zeitbereich erzeugt, das mittels eines von einer Kamera (einem gerasterten Detektor) aufgenommenen Bilderstapels, jeweils in einem Pixel j detektiert wird. Wird z.B. der Fall harmonischer Schwingungen der Signalintensität über die Zeit betrachtet, bedeutet der Chirp-Effekt, dass jede harmonische Schwingung (in einem Ensemble von Schwingungen) eine frequenzabhängige Phasen-Verschiebung phi(f_i) zu einem Referenzzeitpunkt besitzt. Das kann hierbei der Startpunkt t_0 der Belichtung sein (z.B. beim Aktivwerden des SLMs im Messvorgang). Vor dem Startpunkt t_0 erfolgt überhaupt kein Lichtfluss, der vom SLM oder der elektronisch steuerbaren multispektralen Lichtquelle ausgeht, wodurch die Belichtung der Kamera ab Startpunkt t_0 mit harmonischen Schwingungen mit der unterschiedlichen Frequenz f_i und unterschiedlicher Phasen-Verschiebung phi(f_i) (= unterschiedliche Startphase) erfolgt. Die harmonischen Schwingungen sind vorzugsweise in der gesamten Messzeit - gleich Belichtungszeit des gerasterten Detektors - niemals alle in Phase.

Signale (Summensignale als Überlagerung mehrerer harmonischen Schwingungen) mit Chirp-Effekt stellen jedoch nur eine von mehreren Möglichkeiten dar, um die Dynamik eines Signals zu begrenzen.

Wie oben beschrieben werden die Startphasen der einzelnen harmonischen Schwingungen untereinander unterschiedlich gewählt bzw. festgelegt (der Startphasenwert Null stellt folglich lediglich eine Ausnahme dar). Dabei ist die Startphase der einzelnen harmonischen Schwingungen stetig fallend oder steigend und kann linear oder nichtlinear sein. Deshalb gibt es auch Summensignale, die keinen oder keinen ausgeprägten Chirp-Effekt zeigen. Dennoch können diese Signale bzw. Summensignale kein ausgeprägtes Maximum aufweisen und sind somit geeignet, die Anforderungen an die Modulation eines Detektors zu verringern.

In einem Beispiel können die einzelnen Spektralanteile bzw. Spektralkomponenten über die gesamte Zeit mit der jeweils ihnen einmal zugewiesenen unveränderlichen Frequenz moduliert werden (z.B. mittels eines räumlichen Lichtmodulators). Diese ist von Spektralanteil zu Spektralanteil unterschiedlich und im mathematischen Sinn eineindeutig. Jedem Spektralanteil bzw. jeder Spektralkomponente kann ein schmales Wellenzahlband $delta\_kb\_i$ im Spektrum des multispektralen Beleuchtungsbündels zugewiesen werden. Jeder Spektralanteil besitzt die nur ihm zugeordnete Modulationsfrequenz $f\_i$ am SLM-Element i. Durch die Überlagerung der einzelnen Oszillationen, generiert durch die unterschiedlich schwingenden Elemente des räumlichen Lichtmodulators mit letztendlich stattfindender Überlagerung an/auf jeweils einem Pixel der Kamera entsteht ein Summensignal. Obwohl die Frequenzen der einzelnen harmonischen, aufsummierten Schwingungen über die Zeit konstant bleiben, zeigt das erfasste Zeitsignal den Effekt einer frequenzmäßigen Veränderung der einzelnen Modulationen im Summensignal, wobei oft eine Erhöhung oder Verringerung der Frequenz der Modulationen (Chirping) im Summensignal zu beobachten ist. Durch die gezielte Beeinflussung der Startphasen in harmonischen Signalen kann eine Modulation mit Dynamik-Reduktion erreicht werden.

Durch Frequenz-Chirping (Phasengang in Zeitbereich) oder durch unterschiedliche Startphasen der Frequenzkodierung kann eine optimale Anpassung der Strahlungsintensität an die Dynamik des Detektionssystems (in der Regel eine Kamera, z.B. eine CCD Kamera oder ein Wechsellicht-Detektor für den Infrarot-Spektralbereich) erreicht werden, wobei der Vorteil für einen Wechsellicht-Detektor größer ist, da kein Gleichanteil im Wechsel-Signal detektiert werden muss, der auch einen Teil des gegebenen Dynamikumfanges in Anspruch nimmt.. Das kann das Signal-Rausch Verhältnis verbessern und die Messzeit reduzieren, was insbesondere bei medizinischen Applikationen von großem Vorteil ist. Dadurch kann z.B. bei Gewebe-Diagnostik in der OP-Phase sichergestellt werden, dass die thermische Belastbarkeit des Gewebes nicht überschritten wird. Bei einer aperiodischen Modulation ist die Steuerung des räumlichen Lichtmodulators vorzugsweise mit dem Detektionssystem synchronisiert.

Die Modulationseinrichtung kann ferner ausgelegt sein, die Modulationsfrequenz der einzelnen Spektralkomponenten linear zu ändern. So kann z.B. die Modulationsfrequenz eine lineare Funktion der Wellenlänge bzw. der Schwerpunktwellenlänge eines Wellenlängenbereichs oder der Wellenzahl sein. Bei einem räumlichen Lichtmodulator kann sich z.B. die Modulationsfrequenz linear entlang der spektralen Achse (der Wellenachse bzw. der Wellenzahlachse (im k-Raum), z.B. in Spalten oder Zeilenrichtung des räumlichen Lichtmodulators, ändern. Vorzugsweise ändert sich die Modulationsfrequenz linear mit der Wellenzahl. Dies ermöglicht eine algorithmisch einfachere Auswertung, die schnell und vergleichsweise wenig Rechenleistung erfordert. Es ist jedoch möglich die Modulationsfrequenz nicht linear zu ändern.

Ein Vorteil der vorgeschlagenen Beleuchtungsvorrichtung ist deren hohe Flexibilität. So können die Parameter der Modulation (zeitlich und/oder räumlich) flexibel entsprechend der jeweiligen Anwendung gewählt und per "Mausklick" geändert werden. Die Modulationsfrequenz kann gegenüber der physikalischen Wellenlänge der elektromagnetischen Strahlung frei gewählt werden. So kann z.B. die Modulationsfrequenz gegenüber der physikalischen "invertiert" werden. Die Modulationsfrequenz kann ferner frei gewählt werden. Insbesondere kann die Modulationsfrequenz frei verschoben werden: z.B. erst kleinste Wellenlänge mit Wandlung zu kleinster Modulationsfrequenz, dann kleinste Wellenlänge mit Wandlung zu größter Modulationsfrequenz. Allgemein können die Orte gleicher Modulationsfrequenz ebenfalls frei gewählt werden und z.B. lateral (z.B. entlang der Wellenachse bzw. Wellenzahlachse des räumlichen Lichtmodulators oder entlang des Arrays von einzelnen Lichtquellen mit zugeordneten Ansteuermodule) "wandern". Dadurch kann eine verbesserte Mittelung des erhaltenen Signals erzielt werden. Die Änderung der Modulationsfrequenz kann ferner entsprechend dem Verhältnis der Wellenlängen oder der Wellenzahlen erfolgen, so dass das Spektrum nicht umgerechnet (gedehnt oder gestaucht) werden muss.

Ferner ermöglicht die Vielzahl möglicher Codierungen, insbesondere in Verbindung mit passender Auswertung, die Diskriminierung einer hohen Anzahl spektraler Kanäle. Ein weiterer Vorteil ist, dass der Einsatz beweglicher Teile nicht erforderlich ist, was die Präzision und Genauigkeit der Vorrichtung erhöht. Des Weiteren kann die Beleuchtungsvorrichtung in einer kompakten Bauweise ausgeführt werden.

Mit der oben beschriebenen Beleuchtungsvorrichtung ist es möglich, zeitlich-räumlich modulierter elektromagnetischer Strahlung für eine Vielzahl von Bildgebungs- und Messverfahren und -Vorrichtungen bereitzustellen, z.B. für multi- oder hyperspektrale Kameras, chromatisch-konfokale oder interferometrische, insbesondere auch spektral-interferometrische Messverfahren und -Vorrichtungen, Fluoreszenz-Mikroskopie, Multiphotonen Mikroskopie, etc.. So kann beispielsweise mit dem zeitlich-räumlich modulierten Licht eine Punktlicht-Quellenbeleuchtung im Objektraum einer chromatisch-konfokalen Messanordnung, erfolgen, und so über chromatischer Tiefenscan Informationen über den 2-D und 3-D Profil eines untersuchten Objekts erhalten werden.

Die Vorrichtung zur multi- oder hyperspektralen Bildgebung umfasst ferner:

eine Bildaufnahmeeinrichtung, welche ausgelegt ist, eine zeitliche Abfolge von zwei-dimensionalen Bilder eines mit dem multispektralen Licht beleuchteten Objekts zu erfassen, umfassend zumindest einen gerasterten, zweidimensionalen Detektor mit mehreren Detektorelementen, welcher ausgelegt ist die Intensität zumindest eines Teils des von dem Objekt kommenden Licht (reflektierten oder transmittierten Licht, Lumineszenz- oder Fluoreszenzlicht) zu detektieren;
eine Bildauswerteeinrichtung, welche ausgelegt ist, die Anteile der einzelnen Spektralkomponenten (in den erhaltenen, z.B. in Form eines Bilderstapels aufgenommenen Bildern) durch eine pixelweise Analyse der zeitlichen Variation der von jedem Detektorelement detektierten Intensität zu ermitteln und anhand der ermittelten Anteile der einzelnen Spektralkomponenten, ein multi- oder hyperspektrales Bild des Objekts zu erstellen.

Insbesondere können für jedes Detektorelement durch eine Analyse (z.B. eine Frequenzanalyse) des detektierten Intensitätsprofils I(t) sowie anhand von Informationen über die verwendete Kodierung bzw. Modulation der einzelnen Spektralkomponente die Anteile der einzelnen Spektralkomponenten bestimmt werden und ein multi- bzw. hyperspektrales Bild des Objekts erstellt werden. Die Informationen über die verwendeten Kodierung bzw. Modulation können z.B. Informationen über die Zuordnung der einzelnen Frequenzkomponenten zu den einzelnen Spektralbereichen umfassen, z.B. über eine Lookup-Tabelle ("**L**ook-**U**p-**T**able" (LUT)).

Die Modulationseinrichtung kann, wie oben beschrieben ausgelegt sein, die einzelnen Spektralkomponenten mit unterschiedlichen Grundfrequenzen oder Grundfrequenzbereiche und/oder mit unterschiedlichen Modulationssequenzen zu modulieren. Die Bildauswerteeinrichtung kann ausgelegt sein, für jedes Detektorelement eine Frequenzanalyse der zeitlichen Variation der detektierten Intensität und eine Modulations-Wellenlängen-I<onversion mittels einer (zumindest näherungsweise vorbekannten) Zuordnung (z.B. über ein LUT) der ermittelten Modulationsfrequenzen zu einer bestimmten Grundfrequenz oder einem bestimmten Grundfrequenzbereich und/oder einer bestimmten Modulationssequenz der einzelnen Spektralbereiche durchzuführen.

Die von der Bildauswerteeinrichtung durchgeführte Analyse kann z.B. eine pixelweise Fourier Analyse, insbesondere eine FFT-Analyse, eine Waveletanalyse, eine Lock-in-Detektion, oder andere geeignete Analyse des detektierten Intensitätsprofils bzw. der detektierten zeitlichen Variation der Intensität sein bzw. umfassen. Die Bildauswerteeinrichtung kann ferner ausgelegt sein, eine Korrelation der anhand der detektierten Intensität ermittelten Modulationen mit den von der Modulationsvorrichtung durchgeführten Modulationen der Spektralkomponenten durchzuführen, um die einzelnen Spektralkomponenten zu diskriminieren.

Die Vorrichtung zur multi- oder hyperspektralen Bildgebung kann ferner eine Synchronisationseinrichtung umfassen, welche ausgelegt ist, die Modulation der einzelnen Spektralkomponenten durch die Modulationseinrichtung und die Bildaufnahme durch die Bildaufnahmeeinrichtung zu synchronisieren.

So kann, insbesondere bei aperiodischen I<odierungen, eine zeitliche Synchronisation zwischen der Modulationseinrichtung zur frequenzmäßigen Multiplex-Kodierung der Spektralkomponente des multispektralen Lichts bzw. der Spektralverteilung einer oder mehreren Lichtquellen und der Bildaufnahmeeinrichtung (insbesondere dem zweidimensionalen Detektor) durchgeführt werden. Eine Synchronisation kann beim Vorliegen von a-priori Informationen über die verwendete Kodierung oder bei einer periodischen Kodierung ausbleiben. Insbesondere kann der Zeitbeginn der SLM-Modulation bzw. der SLM-Steuerung oder der Steuerung der einzelnen elektronischen Ansteuermodule mit dem Start der Bildaufnahme synchronisiert werden. Dadurch die Synchronisation kann die Robustheit und die Genauigkeit und Bildqualität der multi- oder hyperspektralen Bildgebungsvorrichtung verbessert werden.

Die Vorrichtung zur multi- oder hyperspektralen Bildgebung kann ferner mehrere Fabry-Perot-Filter zum Demodulieren der spektralen Wavelets im Frequenzraum umfassen.

Die Vorrichtung zur multi- oder hyperspektralen Bildgebung kann ferner einen Speicher zum temporären und/oder permanenten Speichern der erfassten Abfolge von zwei-dimensionalen Bildern; und/oder zum temporären und/oder permanenten Speichern von dem ermittelten multi- oder hyperspektralen Bild umfassen. Die Bildauswerteeinrichtung kann zumindest einen Prozessor (z.B. einen Grafikprozessor) umfassen, welcher ausgelegt ist, die notwendigen mathematischen Operationen zum Erstellen des multi- oder hyperspektralen Bilds des Objekts durchzuführen. Der Prozessor kann ferner ausgelegt sein, das erstellte und gegebenenfalls gespeicherte multi- oder hyperspektrale Bild des Objekts zur Anzeige (vorzugsweise in Form von 3-D Grafik) auf eine Anzeigevorrichtung (z.B. einen Computerbildschirm, Kamerabildschirm, etc.) zu rendern. Die Anzeigeeinrichtung kann Bestandteil der Vorrichtung zur multi- oder hyperspektralen Bildgebung sein.

Die Bildaufnahmeeinrichtung und Bildauswerteeinrichtung können in einem Kamera-Modul integriert werden, z.B. in einer so genannten "Smart-Kamera", d.h. eine Kamera mit Rechenkapazitäten bzw. mit "on-chip intelligence". Der gerasterte Detektor kann entsprechend der Anwendung und des detektierten Spektralbereichs gewählt werden. Der Detektor kann z.B. eine CCD Kamera, eine CMOS Kamera, ein Bolometer-Array für MIR Spektralbereich, InGas Kamera für NIR Spektralbereich, etc. sein.

Ein Vorteil der vorgeschlagenen Vorrichtung zur multi- oder hyperspektralen Bildgebung ist, dass alle Spektralkomponente bzw. Spektralanteile im Wesentlichen gleichzeitig im optischen Kontakt mit dem Objekt sind. Dadurch kann das Signal/Rausch Verhältnis erheblich reduziert werden. Ein weiterer Vorteil ist die massive Parallelisierbarkeit der Datenaufnahme und Datenverarbeitung, die insbesondere durch die Verwendung von spezialisierter Hardware (wie z.B. Smart-Kameras, Grafikprozessoren, etc.) und Software ermöglicht wird. Weitere Vorteile umfassen die bereits in Zusammenhang mit der Beleuchtungsvorrichtung erwähnten Vorteile, wie z.B. hohe Flexibilität, Entkopplung der Modulationsfrequenz von der modulierten physikalischen Wellenlänge der elektromagnetischen Strahlung, die Vielzahl möglicher Codierungen und spektraler Kanäle.

Gemäß einem zweiten Aspekt der Erfindung wird eine multi- oder hyperspektrale Messvorrichtung zur Distanzmessung zur und/oder zur Topographiemessung eines Objekts mittels Spektroskopie bereitgestellt, welche eine Vorrichtung zur multispektralen Bildgebung gemäß dem ersten Aspekt umfasst. Die Messvorrichtung zur Distanzmessung zur und/oder zur Topographiemessung umfasst ferner - je nach Anwendung - ein chromatisch konfokales System, ein chromatisches Triangulationssystem, ein Spektral-Interferometer, ein Fluoreszenzmikroskop oder ein Multiphotonenmikroskop. Dadurch können neben Farbdaten, Daten zur Distanz zu einem oder mehreren Objekten, den 2-D oder 3-D Profil eines Objekts, die Topographie eines Objekts, die Verteilung bestimmter Stoffe und/oder Strukturen in einem Objekt, etc. erhalten werden.

Vorzugsweise erfolgt die Lichtzuführung in den obigen Vorrichtungen gemäß dem ersten und zweiten Aspekt zumindest teilweise über Lichtwellenleiter. So kann vorzugsweise das Licht zum räumlichen Lichtmodulator und/oder zu den anderen optischen Komponenten (wie z.B. chromatisch konfokales System, Mikroskopobjektiv, etc.) zumindest teilweise über Lichtwellenleiter geführt werden. Vorzugseise wird eine Mehrfachbündel- (z.B. 8 Bündel) auf eine Einzelbündel-Kopplung und/oder eine Mehrfachfaser- (z.B. 8 Fasern) auf eine Einzelfaser-Kopplung durchgeführt. Die Lichtzuführung bzw. Lichtführung zwischen den einzelnen optischen Komponenten kann ebenfalls mittels geeigneter optischer Ablenkeinrichtungen umfassend zumindest einen Spiegel, Strahlteiler eine Linse und/oder andere optische Elemente erfolgen.

Gemäß einem dritten Aspekt der Erfindung wird ferner ein Verfahren zur multi- oder hyperspektralen Bildgebung eines Objekts vorgeschlagen. Das Verfahren zur multi- oder hyperspektralen Bildgebung umfasst Erzeugen von multi- oder hyperspektralem Beleuchtungslicht mit adressierbarem Spektrum nach einem Verfahren zum Erzeugen von multi- oder hyperspektralem Beleuchtungslicht mit adressierbarem Spektrum mit den folgenden Schritten:

Erzeugen von multispektralem Licht; und zeitliches Modulieren der einzelnen Spektralkomponenten des multispektralen Lichts (umfassend insbesondere zeitliches Modulieren der Amplitude der einzelnen Spektralkomponenten und/oder Festlegen der Startphase der Modulationen) mit jeweils voneinander unterschiedlichen Modulationsfrequenzen, Modulationsfrequenzbereichen und/oder Modulationssequenzen, wobei

(i) das Erzeugen von multispektralem Licht ein spektrales Aufspalten des von einer kontinuierlichen, quasi-kontinuierlichen oder FrequenzkammLichtquelle emittierten Lichts in mehreren, räumlich voneinander getrennten Spektralkomponenten mit voneinander jeweils unterschiedlichen Wellenlängen $\lambda_1$, $\lambda_2$, ..., $\lambda_n$ oder Wellenlängenbändern umfasst; und das zeitliche Modulieren der einzelnen Spektralkomponenten mittels eines elektrisch steuerbaren, räumlichen Lichtmodulators erfolgt; oder
(ii) das Erzeugen von multispektralem Licht ein Emittieren von Licht mit mehreren, voneinander jeweils verschiedenen Spektralkomponenten mit voneinander unterschiedlichen Emissions-Wellenlängen $\lambda_1$, $\lambda_2$, ..., $\lambda_n$ oder Emissions-Wellenlängenbändern von einem Ensemble oder Array von mehreren monochromatischen oder quasi-monochromatischen Lichtquellen umfasst und das zeitliche Modulieren mittels elektronischen Ansteuermodulen, welche der einzelnen Lichtquellen zugeordnet sind, erfolgt; und

wobei das Verfahren ferner ein Zusammensetzen der einzelnen modulierten Spektralkomponenten des von der multispektralen Lichtquelle emittierten Lichts umfasst, so dass diese im Wesentlichen räumlich miteinander überlappen, um das um das multi- oder hyperspektrales Beleuchtungslicht mit adressiertem Spektrum zu bilden. Das zeitliche Modulieren der einzelnen Spektralkomponenten umfasst ein Festlegen der Startphasen der Modulationen der einzelnen Spektralkomponenten bezogen auf einem Startzeitpunkt einer Beleuchtung des gerasterten Detektors, wobei die Startphasen stetig fallend oder stetig steigend festgelegt werden.

Wie in Zusammenhang mit der oben beschriebenen Beleuchtungsvorrichtung ausgeführt, kann das zeitliche Modulieren der einzelnen Spektralkomponente periodisch oder aperiodisch sein. Das zeitliche Modulieren kann z.B. ein Frequenz-Chirping umfassen. Das zeitliche Modulieren umfasst ferner eine Variation der Startphasen, die von Modulationsfrequenz zu Modulationsfrequenz unterschiedlich sein kann, jedoch vorzugsweise zeitlich unveränderlich ist. Die Variation der Startphasen ist in Abhängigkeit von der Modulationsfrequenz vorzugsweise nichtlinear, besonders bevorzugt quadratisch. Ferner kann das zeitliche Modulieren eine lineare Änderung der Modulationsfrequenz der einzelnen Spektralkomponenten umfassen. Des Weiteren kann das Modulieren eine Veränderung der Amplitude der Modulationen der einzelnen Spektralkomponenten umfassen. So kann z.B. eine Apodisation durchgeführt werden.

Ferner bevorzugt, umfasst das Verfahren zum Erzeugen von multi- oder hyperspektralem Beleuchtungslicht ein selektives spektrales Filtern des von der Lichtquelle mit dem kontinuierlichen, quasi-kontinuierlichen oder Frequenzkamm-Spektrum emittierten Lichts oder des von den einzelnen monochromatischen oder quasi- monochromatischen Lichtquellen emittierten Lichts, wie in Zusammenhang mit der Beleuchtungsvorrichtung gemäß dem ersten Aspekt der Erfindung beschrieben wurde.

Das Verfahren zur multi- oder hyperspel<tralen Bildgebung eines Objekts umfasst ferner:

> Beleuchten des Objekts mit dem multi- oder hyperspektralen Beleuchtungslicht;
> Detektieren einer zeitlichen Abfolge (Bilderstapel) von zwei-dimensionalen Bildern des beleuchteten Objekts mittels eines gerasterten, zweidimensionalen Detektors mit mehreren Detektorelementen, wobei der Detektor ausgelegt ist, die Intensität zumindest eines Teils des von dem Objekt kommenden Licht zu detektieren;
> Ermitteln der Anteile der einzelnen Spektralkomponenten mittels einer pixelweisen Analyse der zeitlichen Variation der von jedem Detektorelement detektierten Lichtintensität und Erstellen eines multi- oder hyperspektralen Bild des Objekts anhand der ermittelten Anteile der einzelnen Spektralkomponenten.

Das Ermitteln der Anteile der einzelnen Spektralkomponenten kann eine Frequenzanalyse der zeitlichen Variation der detektierten Intensität bzw. des jeweiligen Detektorsignals und eine Modulations-Wellenlängen-Konversion mittels einer (zumindest näherungsweise vorbekannten) Zuordnung der ermittelten Modulationsfrequenzen zu einer bestimmten Grundfrequenz oder einem bestimmten Grundfrequenzbereich und/oder einer bestimmten Modulationssequenz der einzelnen Spektralbereiche umfassen.

Das Ermitteln der Anteile der einzelnen Spektralkomponenten kann eine pixelweise Fourier-Analyse oder eine Waveletanalyse der Detektorsignale bzw. der von jedem Detektorelement detektierten Intensität und/oder eine Korrelation der anhand der detektierten Intensität ermittelten Modulationen mit den von der Modulationsvorrichtung durchgeführten Modulationen der Spektralkomponenten umfassen.

Vorzugsweise umfasst das Verfahren ferner Synchronisieren des Modulierens der einzelnen Spektralkomponenten und des Detektierens der zeitlichen Abfolge (Bilderstapel) von zwei-dimensionalen Bildern.

Die Verfahren und Vorrichtungen gemäß bevorzugten Ausführungsformen der Erfindung können folgende Vorteile aufweisen:

Im Vergleich zu Ansätzen mit durchstimmbaren Lichtquellen (s.g. " swept source" Ansatz) hat der erfindungsgemäße Ansatz den Vorteil, dass alle Spektralkomponente oder eine Vielzahl von Spektralkomponenten gleichzeitig im optischen Eingriff mit dem Objekt sind/ist, was die Lichteffizienz erhöht und das Signal/Rausch Verhältnis verbessert. Ein weiterer Vorteil bei der Signalverarbeitung besteht in der massiven Parallelisierbarkeit, welche insbesondere durch den Einsatz von so genannten Smart-Kameras oder spezialisierte Grafikprozessoren ermöglicht wird. Ein weiterer Vorteil ist es, dass alle optischen Elemente (z.B. dispersive optische Elemente, räumliche Modulatoren, etc.) optimal hinsichtlich ihres optischen Wirkungsgrads genutzt werden können.

Weitere Vorteile der Vorrichtungen und Verfahren gemäß bevorzugter Ausführungsformen der Erfindung können umfassen:

- sehr hohe Flexibilität der Parameter der spektralen und der Ortsauflösung bei der multi- und hyperspektralen Bildgebung. Die Parameter können per "Mausclick" geändert werden;
- Sehr hoher Datendurchsatz aufgrund der Multiplexierung und der hoch parallelisierbaren Signalauswertung;
- Auch 3-D Erfassung mit hoher Flexibilität und in einem sehr weiten Skalenbereich ist möglich;
- Sehr große Skalierbarkeit, so dass auch Nano-, Mikro- und Makro-Applikationen möglich sind;
- Miniaturisierbarkeit;
- Einfache Umsetzbarkeit, auch in Produkte für den Massenmarkt;
- Hohe Detektionsgeschwindigkeit, Zuverlässigkeit und Spezifik bei der multi- oder hyperspektralen Bildgebung. Es ist zum Beispiel eine "quasi-zeitaufgelöste" Gewebe-Detektion in weiten Spektralbereichen (VIS-, NIR-, MIR-, FIR, Terahertz-Bereich) möglich. Somit können z.B. Veränderungen in Gewebegestalt (z.B. Veränderungen der Gewebedurchblutung bei Medikamenteneingaben, Monitoring auf der Intensivstation) über der Zeit in Echtzeit oder quasi-Echtzeit für den Arzt in einem flächenhaften Bild des Organs (z.B. nach einer Organtransplantation) sichtbar gemacht werden. Ferner ist eine sehr gute Anpassung an vielfältige diagnostische Aufgaben in der ambulanten und stationären medizinischen Behandlung möglich.

Die oben beschriebenen Vorrichtungen und Verfahren zum Erzeugen von multi- oder hyperspektralem Beleuchtungslicht, zur multi- oder hyperspektralen Bildgebung und Messung sind insbesondere zur schnellen, vollflächigen multi- bzw. hyperspektralen 2-D oder 3-D Bildgebung und Untersuchungen geeignet. Ferner sind die vorgeschlagenen Vorrichtungen und Verfahren geeignet für bildgebende Untersuchungen mittels Detektion des vom Objekt reflektierten, transmittierten, absorbierten oder gestreuten Lichts oder des vom Objekt emittierten Lumineszenz- (einschließlich Fluoreszenz-) Licht.

Anwendungsgebiete der Erfindung umfassen:

- Multi- oder hyperspektrale Kameras, einschließlich Kameras zur Massenproduktion;
- Medizinische Applikationen zur Diagnostik an Patienten ambulant oder stationär, z.B. in der Zahndiagnostik, Diagnostik von Tumorerkrankungen, insbesondere zur schnellen und zuverlässigen Diagnostik bzw. Erkennung von Tumoren (Status-Analyse) in der chirurgischen Operationsphase;
- Zahntechnik, insbesondere. 3-D Zahnmesstechnik am Patienten (in vivo) mit spektraler Analyse des Zahnmaterials, um die Ästhetik des Zahnersatzes durch eine optimale Anpassung des Zahnersatzes an den natürlichen Zahnfarben zu verbessern.
- Messtechnische Applikationen in der Materialwissenschaften, z.B. zur Schweißnahtkontrolle, 2-D oder 3-D Erfassung von Objektprofile und Topographien mit gleichzeitiger Farberfassung, z.B. zur Detektion von Schmauchspuren);
- Fertigungsüberwachung (z.B. zur schnellen hochauflösenden multi- und hyperspektralen Bildgebung von Textilien, Farben, Lacke, Kunststoffe, etc.);
- Überwachung der Erzeugung von Lebensmitteln (z.B. Kontrolle des Reifgrades von Obst und Gemüse, der Frische von tierischen Produkten, etc.);
- Tieraufzucht;
- Medizinische Forschung;
- Fälschungssicherheit (z.B. zur Kontrolle von Banknoten, Gemälde, etc.).
- Analyse vom Kunstobjekten (z.B. zur Analyse des Lackschichtenaufbaus);
- Schnelle und hochauflösende 3-D Erfassung mittels spektraler Informationen bei technischen und medizinischen Applikationen, insbesondere für die 3-D Messtechnik, wie z.B. chromatisch-konfokale Sensorik, chromatische Triangulations-Messtechnik und spektral-interferometrische Applikationen;
- Mikroskopische Untersuchungen.

Weiteren Aufgaben, Merkmale und Vorteile der vorliegenden Erfindung werden offensichtlich aus einer detaillierten Beschreibung bevorzugter Ausführungsformen der vorliegenden Erfindung mit Bezug auf die Zeichnungen, in welchen zeigt:

| Fig.1 | eine schematische Darstellung einer ersten beispielhaften Vorrichtung zur multi- oder hyperspektralen Bildgebung; |
| Fig. 2 | eine schematische Darstellung einer ersten beispielhaften multi- oder hyperspektralen Messvorrichtung; |
| Fig. 3 | eine schematische Darstellung einer zweiten beispielhaften Vorrichtung zur multi- oder hyperspektralen Bildgebung; |
| Fig. 4 | eine beispielhafte Modulation der Spektralkomponenten; |
| Fig. 5 | eine schematische Darstellung einer zweiten beispielhaften multi- oder hyperspektralen Messvorrichtung; |
| Fig. 6 | eine schematische Darstellung einer dritten beispielhaften multi- oder hyperspektralen Messvorrichtung; |
| Fig. 7 | ein beispielhaftes Signal für einen Bildpunkt, das aus einer Spektralzelle generiert wird; |
| Fig. 8 | eine schematische Darstellung eines spektralen Interferometers; |
| Fig. 9 | eine beispielhafte Dynamikreduktion im Signalverlauf durch eine nichtlineare Variation der Startphasen; |
| Fig. 10 | eine schematische Darstellung einer hyperspektralen Bildgebungs- und/oder Messvorrichtung zur Anwendung bei chirurgischen Eingriffen. |

In den Figuren werden die gleichen Bezugszeichen für die gleichen oder ähnlichen Elemente verwendet.

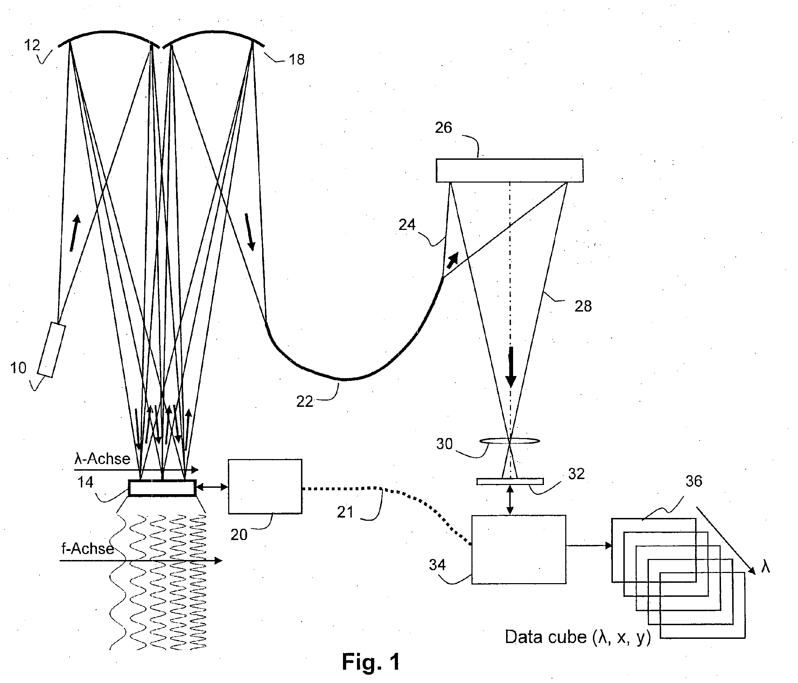

**Fig. 1** zeigt den prinzipiellen Aufbau einer ersten beispielhaften Vorrichtung zur multi- oder hyperspektralen Bildgebung.

Elektromagnetische Strahlung einer Lichtquelle 10, z.B. einer Lichtquelle mit kontinuierlichem oder quasi-kontinuierlichem Spektrum oder einer Lichtquelle mit Frequenzkamm-Spektrum (z.B. ein Frequenzkammlaser oder SLD mit nachgeordnetem FPI) wird mittels erster dispersiver optischer Mittel 12 (in diesem Beispiel gekrümmtes Beugungsgitter) spektral derart aufgespalten, dass in einer vorgegebenen Ebene (nachfolgend kurz Ebene "S") oder in einem vorgegebenen räumlichen Bereich die einzelnen Spektralkomponenten im Wesentlichen räumlich voneinander getrennt sind. In dieser Ebene bzw. in diesem räumlichen Bereich kann eine spektrale Achse (auch Wellenlängen-Achse WA oder λ-Achse genannt) definiert werden. Entlang dieser Achse (λ-Achse) sind die unterschiedlichen Spektralkomponenten des ursprünglichen kontinuierlichen Spektrums räumlich getrennt voneinander angeordnet. Anders ausgedrückt ist die Spektralachse die Achse, entlang welcher das Spektrum entsprechend der Wellenlänge oder der Farbe aufgespalten wird.

Die Lichtquelle 10 weist vorzugsweise möglichst hoher Brillanz auf, wodurch die spektrale Auflösung verbessert wird. Die Lichtquelle 10 kann z.B. ein Linien- oder Punktstrahler sein. Die Lichtquelle kann eine Quelle im ultravioletten Spektralbereich (extremes, starkes und schwaches Ultraviolett, d.h. EUV, DUV, UV), sichtbaren Spektralbereich (VIS), infraroten Spektralbereich (nahes, mittleres und fernes Infrarot, d.h. NIR, MIR, FIR) oder Tera-Hz Spektralbereich sein.

In der Ebene "S" ist ein zwei-dimensionaler, elektrisch steuerbarer, räumlicher Lichtmodulator (SLM) 14 angeordnet. Der räumliche Lichtmodulator 14 umfasst mehrere, individuell steuerbare, in Zeilen und/oder Spalten angeordnete SLM-Elemente. Somit befindet sich die spektrale Achse auf dem elektrisch steuerbaren, räumlichen Lichtmodulator 14 bzw. in der Ebene des Lichtmodulators 14. Die Richtung der spektralen Achse ist vorzugsweise entweder in der Spalten- oder in der Zeilenrichtung des Lichtmodulators 14. Als elektrisch steuerbare, räumliche Lichtmodulatoren können z.B. DMD ("**D**igital Mirror Device"), LCD ("**L**iquid Crystal Display", LCoS ("Liquid Crystal on Silicon"), etc. verwendet werden. Vorzugseise wird als Lichtmodulator 14 ein DMD verwendet, da DMDs eine sehr gute Lichteffizienz hinsichtlich der lichtmodulierenden Elemente aufweisen. Ist die Lichtquelle 10 ein Frequenzkammlaser oder eine SLD mit nachgeordnetem FPI, dann ist *der* Frequenzkammlaser oder die SLD, etc. vorzugsweise so ausgelegt, dass je eine Linie mindestens ein eigenes SLM-Element trifft. Vorzugsweise trifft jede Frequenzkammlinie 2 oder 3 SLM-Elemente. Vorzugsweise weist der Frequenzkammlaser oder die SLD etwa um 100 Linien im Einsatz im genutzten Spektralbereich.

Der räumliche Lichtmodulator 14 kann mit einem Rechner 20 bzw. SLM-Steuer- und/oder Regelungsmittel (SLM-Controller) zur Steuerung des Lichtmodulators 14 und insbesondere für Frequenzansteuerung der einzelnen Spektralkomponenten z.B. mittels Pulsweiten-Modulation, verbunden sein. Der räumliche Lichtmodulator 14 und der Sub-Rechner 20 können in einem Modul integriert sein. Der räumliche Lichtmodulator und der Rechner 20 sind Bestandteile der Modulationseinrichtung.

Die einzelnen Spektralbereiche bzw. Spektralkomponente werden nun in Richtung der spektralen Achse zeitlich kodiert, z.B. frequenzmoduliert, z.B. mittels einer z.B. Pulsweiten-Modulation. So kann z.B. der längerwellige Bereich (z.B. rot) mit der Modulationsfrequenz 10 Hz moduliert werden und der kürzerwellige Bereich (z.B. blau) mit der Modulationsfrequenz 30 Hz. Die zeitliche Kodierung (z.B. die Frequenzmodulation) der einzelnen Spektralkomponente erfolgt mittels entsprechender Kodierung bzw. Modulation des elektrisch steuerbaren, räumlichen Lichtmodulators 14 entlang einer Achse (f-Achse), die im Wesentlichen parallel zu der spektralen Achse ist. Entlang der spektralen Achse bzw. der f-Achse des elektrisch steuerbaren, räumlichen Lichtmodulators 14 kann sich die Frequenz in Blöcken von zusammengefassten Spalten oder Zeilen um einen bestimmten Betrag (z.B. jeweils um 1 Hz ändern). So kann der erste Block mit der Frequenz von 10Hz, der zweite mit einer Frequenz von 11 Hz, ... und der letzte Block mit einer Frequenz von 30 Hz moduliert werden.

Die einzelnen zeitlich modulierten Spektralkomponenten werden wieder zusammengeführt bzw. zusammengesetzt, so dass ein multi- oder hyperspektrales Licht mit adressierbarem Spektrum 24 entsteht. Das Zusammenführen der einzelnen Spektralkomponenten kann mittels zweiter wellenlängen-dispersiver optischer Mittel 18 erfolgen (z.B. Beugungsgitter, Prismen, etc.). Die zweiten dispersiven optischen Mittel sind ausgelegt, den von den ersten dispersiven Mitteln 12 eingeführten Winkelunterschied der einzelnen Spektralkomponenten bzw. die von den ersten dispersiven Mitteln eingeführte räumliche Trennung der einzelnen Spektralkomponente zu kompensieren.

Das multispektrale Licht 24 kann in einem Lichtwellenleiter 22 eingekoppelt werden und z.B. als Punktlicht-Quellenbeleuchtung eines Objekts 26 dienen. Die Führung des multispektralen Lichts zum Objekt 26 kann auch über andere geeignete optische Mittel erfolgen (wie z.B. Beamsplitter, Spiegel, Linsen, etc.). Zumindest ein Teil des vom dem beleuchteten Objekts ausgehende Licht (z.B. reflektiertes, transmittiertes oder Fluoreszenz-Licht) wird mittels geeigneter Abbildungsoptik 30 (umfassend z.B. ein Objektiv) auf dem Chip einer Kamera 32 (z.B. eine CCD-Kamera, eine CMOS-Kamera, etc.) abgebildet. Die Abbildungsoptik 30 kann prinzipiell Bestandteil eines beliebigen Abbildungssystems sein, einschließlich eines mikroskopischen Abbildungssystems. So kann die Abbildungsoptik ein Kameraobjektiv und/oder ein Mikroskopobjektiv umfassen.

Die Kamera 32 (als Beispiel eines gerasterten Detektors) erfasst eine zeitliche Abfolge von zwei-dimensionalen Bildern des untersuchten Objekts, d.h. eine Serie von Bildern in unterschiedlichen, nacheinander folgenden zeitlichen Punkten. Die Anzahl der Bilder im erfassten Bilderstapel kann je nach gewünschter spektraler Auflösung gewählt werden, wobei die gewünschte spektrale Auflösung ebenfalls den Grad der Frequenzmodulation bestimmt. Die Phasenfortschreitung zwischen zwei direkt aufeinanderfolgenden Bildern trägt vorzugsweise maximal "Pi" (Einhaltung des Sampling-Theorems). Es ist jedoch auch ein Unter-Sampling möglich, wenn a-priori Kenntnisse vorliegen. Wenn die Lichtquelle 10 stark genug ist, das Messobjekt 26 kooperativ ist (d.h. nicht im Wesentlichen schwarz bzw. absorbierend) und die Beleuchtungs- und Abbildungsoptik hierzu optimiert sind, kann die Kamera 32 vergleichsweise schnell laufen, z.B. mit einer 120Hz Bildrate. Bei einer sehr starken Lichtquelle 10, beispielsweise in Form eines Weißlichtlasers, kann auch eine Hochgeschwindigkeitskamera mit einer Bildrate im einstelligen kHz-Bereich zur Anwendung kommen.

Die Kamera 32 kann mit einem Rechner oder Prozessor 34 in Verbindung stehen, welcher eine pixelweise Analyse des erhaltenen Signals durchführen kann und optional die Bildaufnahme durch die Kamera 32 steuern kann. Der Rechner 34 und die Kamera 32 können in einem Kamera-Modul integriert sein. So kann die Kamera vorzugsweise "on chip intelligence" besitzen und in der Lage sein, eine pixelweise Analyse des erhaltenen Signals, d.h. der Intensität des auf dem Kamera-Chip einfallenden Lichts, durchführen. Die Analyse kann eine FFT Analyse, eine Waveletanalyse, eine Lock-in-Detektion, etc. sein.

Der Rechner bzw. der Prozessor 34 ist ausgelegt, mittels FFT (oder andere Arten von Frequenzanalyse), die Signal-Modulationen in jedem Kamerapixel auszuwerten und anhand der Auswertung die einzelnen Spektralkomponenten zu diskriminieren. Man erhält somit einen Stapel (Data cube ($\lambda$, x, y)) von spektral aufgelösten zwei-dimensionalen Bildern des untersuchten Objekts, d.h. ein multi- oder hyperspektrales Bild 36 des untersuchten Objekts.

Bei einem erfassten Bilderstapel mit z.B. 60 Bildern, 30 Hz Modulationsfrequenz und 120 Hz Kamera-Framerate bei 0,5 s Abtastzeit liegt die Frequenzauflösung bei etwa 1 Hz. In diesem Fall können im realen Einsatz etwa 20 Spektralkanäle bzw. Spektralkomponenten getrennt werden. Hyperspektralbild-Rate würde hier bei 2 Bildern pro Sekunde liegen, wenn die benötigte Rechenleistung des in der Smart-Kamera integrierten Chips (für die FFT oder andere mathematische Operationen) oder des mit der Kamera verbundenen Rechners bzw. Prozessors ausreicht.

Der elektrisch steuerbare, räumliche Lichtmodulator 14 bzw. der Sub-Rechner 20 zur Steuerung des Lichtmodulators 14 ist vorzugsweise mit der Kamera 32 daten- und rechnermäßig gekoppelt, so dass eine Signal- bzw. Datenverbindung 21 zwischen dem Lichtmodulator 14 und der Kamera 32 besteht. Vorzugsweise sind ist die Steuerung des räumlichen Lichtmodulators 14 mit der Steuerung der Kamera 32 synchronisiert. So kann beispielsweise die Kamera 32 nach einem Startbefehl die Aufnahme des Bilderstapels beginnen. Ab dem Startbefehl kann auch der räumliche Lichtmodulator 14 beginnen, die einzelnen SLM-Elemente periodisch zu schalten, wobei z.B. die Schaltfrequenz entlang der spektralen Achse einer Frequenzmodulation unterliegt. Bei einer periodischen Kodierung kann auf die Synchronisation zwischen der Steuerung des räumlichen Lichtmodulators und der CMOS-Kamera 32 verzichtet werden.

Für eine 3D-Erfassung von strukturellen und/oder topographischen Informationen eines Objekts kann ein chromatisch-konfokales System oder ein Spektral-Interferometer verwendet werden.

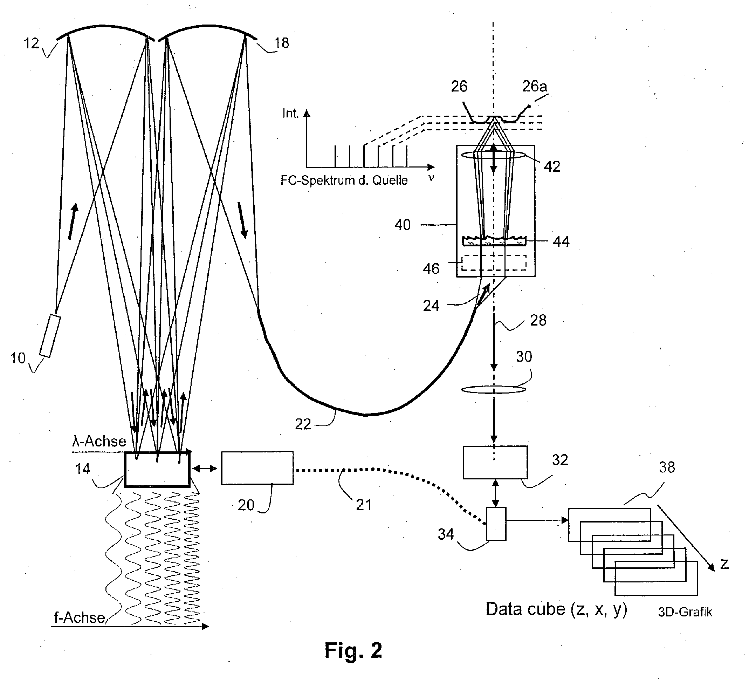

**Fig. 2** zeigt den prinzipiellen Aufbau einer ersten beispielhaften multi- oder hyperspektralen Messvorrichtung zum Erfassen von strukturellen und/oder topographischen Informationen eines Objekts. Der prinzipielle Aufbau der Messvorrichtung entspricht dem in Fig. 1 gezeigten Aufbau, mit dem Unterschied, dass im Beleuchtungsstrahlengang bzw. im Objektraum ein chromatisch-konfokales System 40 oder ein Spektral-Interferometer (nicht in Fig. 2 gezeigt) angeordnet ist. Das chromatisch-konfokale System 40 umfasst zumindest ein diffraktives optisches Element (DOE) 44 für chromatische Aufspaltung des multispektralen Lichts 24 bzw. für chromatische Tiefenaufspaltung, einen Abbildungsobjektiv 42 und optional ein System 46 für Punktbild-Erzeugung und konfokaler Diskriminator mit Abbildungsstufe. Vorzugsweise adressiert jede Spektralkomponente eine eigene Tiefe bzw. einen eigenen Tiefenbereich im Objektraum. Mit der in Fig. 2 gezeigten Vorrichtung ist die chromatisch-konfokale Spektralinterferometrie (CCSI) ebenfalls durchführbar, insbesondere auch in Kombination mit einem Fabri-Perot Interferometer.

Mit dem modulierten multispektralen Licht 24 erfolgt eine Punktlicht-Quellenbeleuchtung im Objektraum der chromatisch-konfokalen Messanordnung 40. Das vom Objekt 26 (z.B. Zahnstumpf 26a) reflektierte Licht 28 wird durch die Abbildungsoptik auf dem Kamera-Chip abgebildet und detektiert. Nach einer pixelweise Frequenzanalyse des erfassten Bilderstapels, einer Diskriminierung der einzelnen Spektralkomponente und einer Zuordnung der einzelnen Spektralkomponente bestimmter Tiefen oder Tiefenbereiche kann ein drei-dimensionales Bild 38 (Data cube (z, x, y)) des untersuchten Objekts 26 bzw. 26a erhalten werden. Des Weiteren kann die vorliegende Spektral-Information zur Farbbestimmung eines Objekts, beispielsweise an einem Zahnstumpf 26a, mitbenutzt werden.

Der obige Ansatz stellt "datentechnisch" einen Fourier-Prozessor dar und ist mit einem Zweistrahl-Interferometer (ZI) vergleichbar. Dieser Ansatz ist jedoch durch die Nutzung eines elektrisch steuerbaren, räumlichen Lichtmodulators 14 technisch sehr viel einfacher und robuster als ein scannendes Zweistrahl-Interferometer. Die sich im Vergleich zu einem scannenden Zweistrahl-Interferometer mit diesem Ansatz i.d.R. ergebende geringere Spektralauflösung ist in vielen technischen Applikationen (z.B. eine hyperspektrale Bildgebung mit immerhin 20 Spektralkanälen) nicht von Nachteil.

Bei den in den Figuren 1 und 2 gezeigten optischen Systeme umfasst die multispektrale Lichtquelle eine polychromatische Lichtquelle 10 mit kontinuierlichem oder quasi-kontinuierlichem Spektrum (Weißlichtquelle) und wellenlängen-dispersive optische Mittel 12, wie z.B. in diesem Beugungsgitter, zur räumlichen Aufspaltung der einzelnen Spektralkomponente. Die multispektrale Lichtquelle kann jedoch mehrere diskrete monochromatische oder quasi-monochromatische Lichtquellen umfassen, wie in den Figuren 3 bis 5 gezeigt.

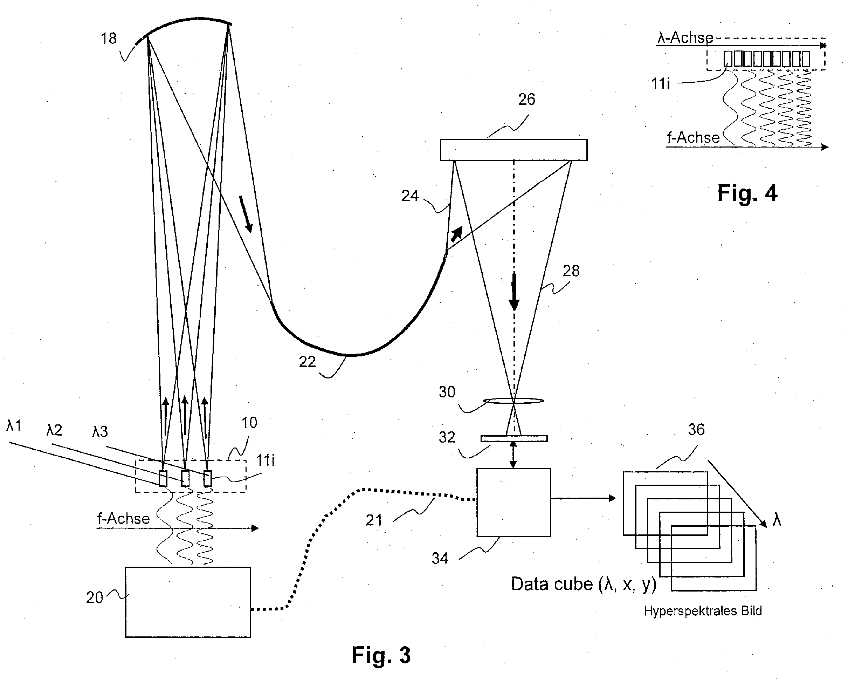

Insbesondere zeigt **Fig. 3** schematisch eine zweite beispielhafte Vorrichtung zur multi- oder hyperspektralen Bildgebung. Der prinzipielle optische Aufbau dieser beispielhaften Vorrichtung entspricht im Wesentlichen dem Aufbau der in Fig. 1 gezeigten Vorrichtung, mit dem Unterschied, dass die multispektrale Lichtquelle ein Array von diskreten bzw. gerasterten, individuell ansteuerbaren, monochromatischen oder quasi-monochromatischen Einzelquellen 11i umfasst. Die Einzelquellen emittieren Licht mit vorbestimmten, voneinander jeweils verschiedenen Emissions-Schwerpunkt-Wellenlängen $\lambda_1$, $\lambda_2$, ... , $\lambda_n$ oder Emissions-Schwerpunkt-Wellenlängenbändern. Die Modulationseinrichtung umfasst mehrere, den Einzelquellen 11i zugeordnete elektronische Ansteuermodulen und einen Rechner 20 oder andere Steuer- und/oder Regelmittel (Controller) für Frequenzansteuerung bzw. Frequenzmodulation des von den Einzelquellen 11i, i=1, 2, .... emittierten Lichts. Die Modulation kann z.B. eine Pulsweiten-Modulation sein, wie in Fig. 4 gezeigt. Die Ansteuermodule und der Rechner bzw. Controller 20 sind Bestandteile der Modulationseinrichtung.

**Fig. 4** zeigt die Frequenzmodulationen (siehe f-Achse) der von den Einzelquellen emittieren Spektrallinien mit unterschiedlichen Wellenlängen $\lambda$. Wie in Fig. 4 gezeigt, können die einzelnen Linien der Array-Lichtquelle mit ansteuerbaren Einzelquellen diskret in der Pulsweite (Modulationsfrequenz) moduliert. Die Modulation kann ebenfalls aperiodisch sein. Die Startphasen der einzelnen Modulationen (harmonische Oszillationen) können vorzugsweise verschieden sein, um den benötigten Dynamikumfang der CMOS-Kamera für die Aufnahme des Summensignals zu begrenzen. Dabei kann ein Summensignal mit Chirp-Effekt, der i. d. R. zu verringerten Signalmaxima des Summensignals führt, gebildet werden.

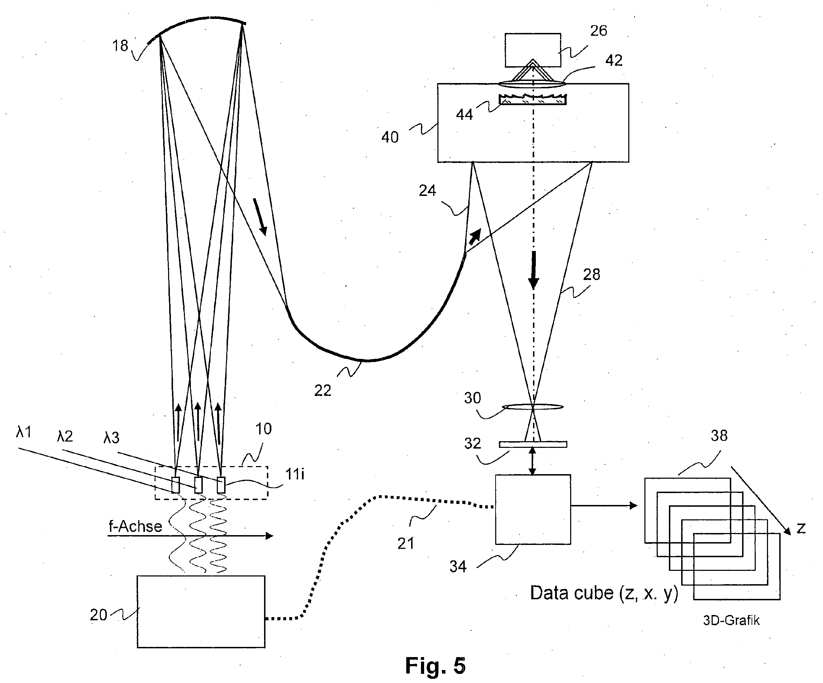

**Fig. 5** zeigt eine schematische Darstellung einer zweiten beispielhaften multi- oder hyperspektralen Messvorrichtung. Der prinzipielle optische Aufbau dieser beispielhaften Vorrichtung entspricht im Wesentlichen dem Aufbau der in Fig. 2 gezeigten Messvorrichtung, mit dem Unterschied, dass - wie in Fig. 3 gezeigt - die multispektrale Lichtquelle einen Ensemble oder Array von diskreten, individuell ansteuerbaren, monochromatischen oder quasi-monochromatischen Einzelquellen 11i umfasst, welche ausgelegt sind, Licht mit vorbestimmten, voneinander jeweils verschiedenen Emissions-Schwerpunkt-Wellenlängen $\lambda_1$, $\lambda_2$, ... , $\lambda_n$ oder Emissions-Schwerpunkt-Wellenlängenbändern zu emittieren.

**Insbesondere** kann die multispektrale Lichtquelle eine gerasterte energiereiche Lichtquelle zur Szenen- oder Objektbeleuchtung mit (sehr) vielen einzelnen Licht abstrahlenden Elementen, z.B. 1064 (32 x 32) im Quadrat angeordneten Mikro-LEDs sein. Die LEDs können beispielswiese 8 verschiedene Farben aufweisen (z.B. 8 verschiedenfarbige Mikro-LED-Typen, gleichmäßig verteilt im Raster). In einem Beispiel werden alle Mikro-LEDs gleicher Farbe (Mittenwellenlänge) per elektronischer Ansteuerung mit der gleichen Modulationsfrequenz (möglichst harmonische Schwingung) beaufschlagt. Somit gibt es 8 verschiedene vorbestimmte (genau bekannte) harmonische Modulationsfrequenzen. Die Startphase der Modulationen kann etwas variiert werden, um die Signaldynamik im Summensignal etwas einzuschränken.

**Diese** gerasterte energiereiche 8-farbige Lichtquelle kann z.B. eine Szene oder ein Objekt unscharf beleuchten. Das kann z.B. mittels Köhlerscher Anordnung erfolgen. Wichtig ist nur, dass das Licht jeder Farbe in der Pupille der Beleuchtungseinrichtung für das Objekt/Szene vorhanden und dabei auch möglichst gut verteilt ist. Jeder Objektpunkt wird somit von Licht jeder der 8 Farben aus vielen Belichtungsrichtungen bestrahlt. Die Kamera, beispielsweise ausgebildet als 120 Hz-Bildrate-Kamera, nimmt beispielsweise 48 Bilder der so beleuchteten Szene auf und kann beispielsweise durch eine FFT des Summensignals in jedem Pixel die Farbzusammensetzung pixelweise (bildpunktweise) ermitteln. So besteht eine 8-Farbkanal-Beleuchtungs- und 8-Farbkanal-Kamera-Anordnung.

**Bei** diesem Ansatz wird kein räumlicher Lichtmodulator benötigt. Die Modulation erfolgt bereits durch die Ansteuerung der Mikro-LEDs gleicher Farbe im Lichtquellen-Array. Es werden ferner keine wellenlängen-dispersiven Mittel zur spektralen Aufspaltung benötigt, da die einzelnen unterschiedlich farbigen Leuchtelemente (Mikro-LEDs in einem Array) bereits räumlich verteilt sind und jeweils durch geeignete vielkanalige Ansteuerungstechnik (mindestens ein Kanal für jede Farbe) getrennt moduliert werden können (z.B. verschiedene Modulationsfrequenzen und/oder verschiedene Startphasen).

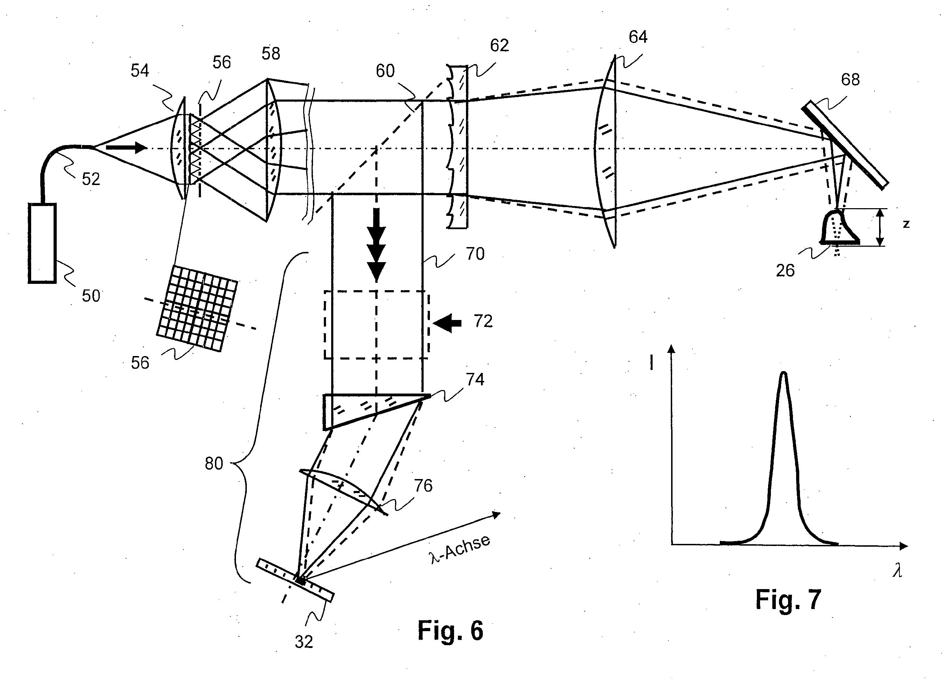

**Fig. 6** zeigt eine schematische Darstellung einer anderen beispielhaften multi- oder hyperspektralen Messvorrichtung. In diesem Beispiel wird die oben beschriebene Beleuchtungsvorrichtung (umfassend die Lichtquelle 10 oder das Array von diskreten monochromatischen oder quasi-monochromatischen Lichtquellen 11i, die dispersiven optische Mittel 12, der räumliche Lichtmodulator 14, die Steuerung 20 und die dispersiven optische Mittel 18) als polychromatische Lichtquelle 50 mit adressierbaren Spektrum in einem aus der Druckschrift DE 10 2006 007 172 B4 bekannten multi- oder hyperspektralen Messvorrichtung integriert.

**Das** von der polychromatischen Lichtquelle 50 emittierte Licht wird in einem Lichtwellenleiter 52 (z.B. eine Monomode-Faser) eingekoppelt und dient als Punktlicht-Quellenbeleuchtung einer Messeinrichtung. Die Messeinrichtung umfasst ein System zur Punktbilderzeugung mit einem gerastetem, flächigem Array von Mikrolinsen und jeweils den Foki der Mikrolinsen zugeordneten Pinholes 56 und einer Abbildungsstufe umfassend die Linsen 54 und 58. Vorzugsweise ist das gerasterte, flächige Array verdreht in Bezug auf die spektrale Achse ($\lambda$-Achse) angeordnet. Das Messsystem umfasst ferner einen Strahlteiler 60, ein diffraktives optisches Element 62, ein Abbildungsobjektiv 64 und einen Spiegel 68. Das vom Objekt 26 reflektierte Licht 70 wird durch den Strahlteiler 60 in einer spektrometrischen Anordnung 80 eingekoppelt. Die spektrometrische Anordnung umfasst ein Prisma 74, Abbildungsoptik 76 und eine Kamera 32 mit einem zwei dimensionalen gerastertem Kamera-Chip. Ferner kann die spektrometrische Anordnung ein zweites System zur Punktbilderzeugung 72 mit einem zweiten Array mit Abbildungsstufe zur konfokalen Diskriminierung umfassen.

**Wie** oben beschrieben, wird durch die Kamera 32 eine zeitliche Abfolge von zwei-dimensionalen Bildern (z.B. in Form eines Bilderstapels) erfasst. Anhand einer pixelweisen Analyse (vorzugsweise eine Frequenzanalyse) der detektierten Intensität kann für jede Pixel bzw. für jede Spektralzelle das Profil der Intensität "I" als Funktion der Wellenlänge λ ermittelt werden. Fig. 7 zeigt ein beispielhaftes Signal (die Intensität des detektierten Lichts als Funktion der Wellenlänge) für einen Bildpunkt, das aus einer Spektralzelle generiert wurde. Anhand dieses Signals können Daten betreffend das drei-dimensionale Profil (x,y,z) des untersuchten Objekts gewonnen werden.

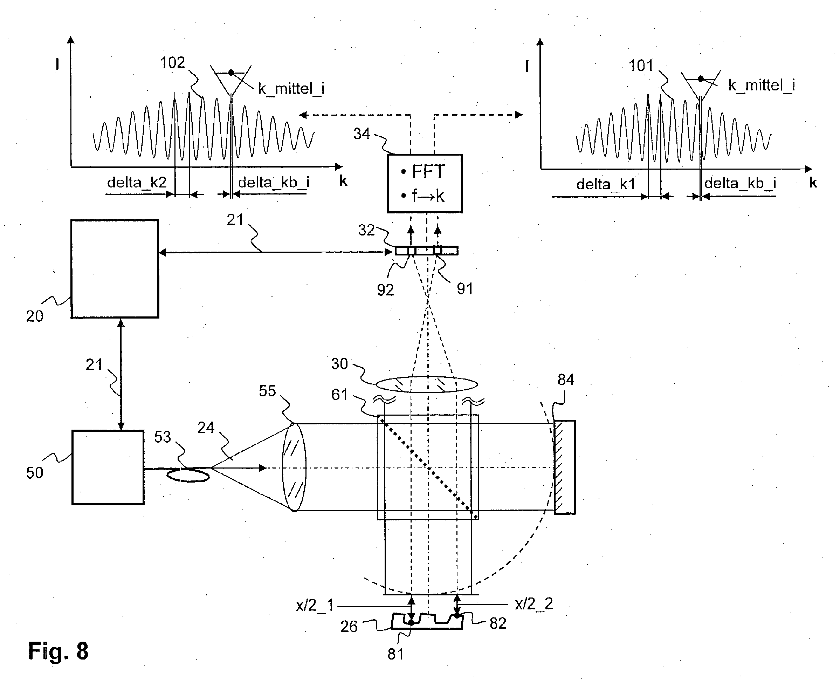

Fig. 8 zeigt eine schematische Darstellung eines spektralen Interferometers. Von einer multispektralen Lichtquelle 50 mit adressierbarem Spektrum tritt Licht in Form eines multispektralen Beleuchtungsbündels 24 über eine Multimode-Faser 53 aus. Das Licht ist hierbei in Abhängigkeit von der physikalischen Wellenzahl k mittels hier nicht dargestellter spektraler Zerlegungskomponenten und einem gesteuertem SLM in bereits beschriebener Art und Weise in der multispektralen Lichtquelle 50 niederfrequent moduliert, wobei jedem schmalen Wellenzahlband delta_kb_i im Spektrum des multispektralen Beleuchtungsbündels 24 eine eigene Frequenz f_i mittels SLM aufgeprägt ist (im Rahmen der dynamischen Möglichkeiten des SLMs und stets unterhalb der halben Bildauslesefrequenz der Kamera 32). Das aus der Multimode-Faser 53 kommende Beleuchtungsbündel 24 wird mittels einer Kollimatorlinse 55 kollimiert und gelangt in ein Spektral-Interferometer.

Das Spektral-Interferometer umfasst einen Interferometer-Strahlteiler 61, wo die Strahlaufspaltung und Strahlvereinigung stattfindet, einen Referenzspiegel 84 und ein Objekt 26, wobei es im Spektral-Interferometer einen von null verschiedenen optischen Gangunterschied für alle Objektelemente dieses Objekts 26 gibt. Hier werden beispielsweise stellvertretend für das Objekt 26 lediglich zwei mikroskopisch kleine Objektelemente 81 und 82 betrachtet, deren Positionen zu einem optischen Gangunterschied von x/2_1 und x/2_2 im Interferometer führen.

Nach Verlassen der interferierenden Bündel mit den jeweiligen optischen Gangunterschieden erfolgt eine zumindest näherungsweise scharfe Abbildung über die Abbildungsoptik 30 auf die Kamera 32, wo je ein Bild von je einem Objektelement 81 beziehungsweise 82 auf je einem Pixel 91 beziehungsweise 92 der Kamera 32 entsteht. Es wird von der Kamera 32 ein Bilderstapel über einem Zeitbereich delta_t aufgenommen. Die Kameradaten gelangen in den Mainrechner 34, wo pixelweise mittels einer schnellen Fourier-Transformation (FFT) eine Frequenzanalyse (f_i) durchgeführt wird, woraus über eine Look-up-Tabelle eine Zuordnung der errechneten Frequenzen im f-Raum zu den Wellenzahlbändern erfolgt, wobei Letztere jeweils durch eine mittlere diskrete Wellenzahl k_mittel_i repräsentiert werden. Somit wird für die beiden betrachteten Objektelemente 81 und 82 je ein Wavelet 101 beziehungsweise 102 mit Intensitätswerten bei diskreten Wellenzahlen errechnet. Im Betrag des Wellenzahlabstandes delta_k1 beziehungsweise delta_k2 der Wavelets 101 beziehungsweise 102 ist die Information über den optischen Gangunterschied x/2_1 beziehungsweise x/2_2 der Objektelemente 81 beziehungsweise 82 enthalten, der aus dem zugehörigen Wavelet 101 beziehungsweise 102 in bekannter Weise, beispielsweise mittels einer schnellen Fourier-Transformation, errechnet werden kann. Das Höhenprofil des Objekts 26 kann dann aus den errechneten Beträgen des optischen Gangunterschieds für alle Objektelemente, welche jeweils durch ein Pixel der Kamera 32 repräsentiert werden und von denen jeweils ein Wavelet oder ein Wavelet-ähnliches Signal aus den Daten des Bilderstapels gewonnen wurde, bestimmt werden.

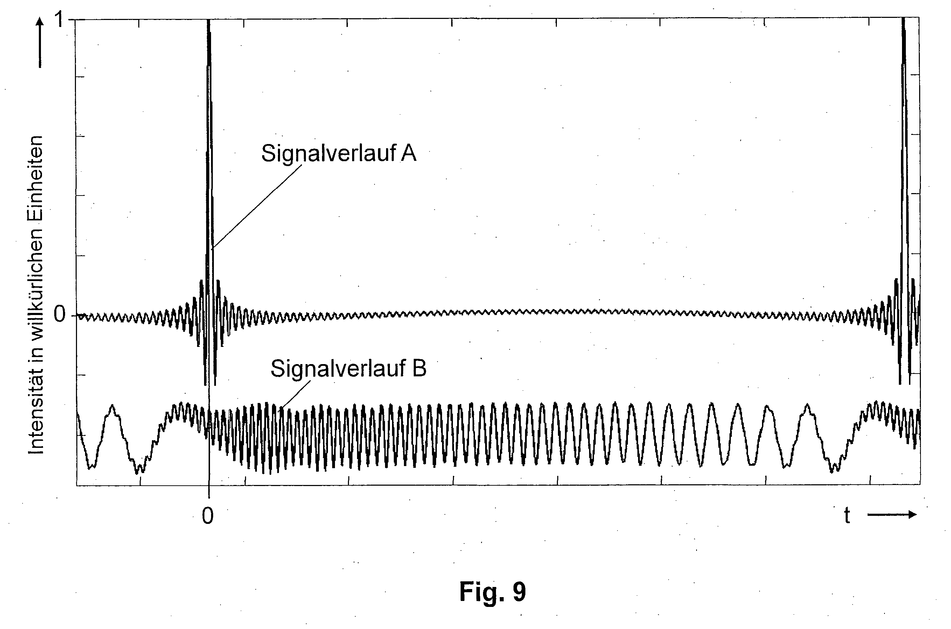

Die Figur 9 zeigt zwei simulierte Signalverläufe A und B über die Zeit als Summensignale von harmonischen Schwingungen. Bei dem dargestellten Signalverlauf A weist die Startphase jeder der harmonischen Schwingungen jeweils den Wert null auf. Bei dem Signalverlauf B werden die Startphasen der harmonischen Schwingungen gezielt variiert. Dazu wurden in einer Simulation jeweils 100 cos-Signale mit den Frequenzen 3 Hz, 6 Hz bis 303 Hz in Schritten von jeweils 3 Hz und jeweils gleicher Amplitude "a" in einem Zeitbereich von näherungsweise 0,4 s aufsummiert.

Im Signal A sind die Anfangsphasen aller 100 cos-Signale auf null gesetzt, wodurch sich mit dem Signalverlauf A der bekannte Verlauf für ein Kurzkohärenz-Interferogramm ergibt. Der Gleichanteil des Signals ist hier jeweils abgespalten. Dieser Fall ist für Wechsellicht-Detektoren im Infrarotbereich typisch. Der Signalverlauf A weist ein hohes Mittenmaximum auf, das hierbei von einem Detektor verarbeitet werden muss. Der Signalverlauf B ist in der Figur 9 zur besseren Erkennbarkeit nach unten verschoben dargestellt. Die Oszillationen erfolgen hier ebenfalls um den Intensitätswert null. Im Signalverlauf B nehmen die Startphasen im Argument der 100 cos-Funktionen verschiedene Werte an. Es handelt sich hierbei ebenfalls um die Frequenzen 3 Hz, 6 Hz bis 303 Hz in Schritten, von jeweils 3 Hz. Auch im Signalverlauf B beträgt die Amplitude aller Schwingungen jeweils "a". Die Startphasen der Schwingungen sind mittels einer quadratischen Funktion gebildet, die folgendem Bildungsgesetz genügt:

$$Pi * i * i / 100 \text{ mit } i = 1, 2, \ldots 100.$$

Somit ergeben sich die Startphasen der Schwingungen für B als eine Folge:

$$(1, 2, 4, 9, 16, 25, \ldots 10000) * pi / 100.$$

Die Aufsummierung der 100 cos-Funktionen mit jeweils einer anderen Startphase gemäß Bildungsgesetz liefert den Signalverlauf B. Dieser Signalverlauf B weist kein erkennbares Mittenmaximum auf und erfordert hier somit einen Detektor mit einem geringeren Dynamikumfang im Vergleich zur Detektion des Signalverlaufs A, wenn ein Spektrum mit Breitband-Charakteristik und vergleichsweise mäßiger Amplitudenmodulation vorliegt. Im mittleren Bereich des Signalverlaufs B erkennt man eine zunehmende Verringerung der Signalfrequenz. Deshalb werden Signale mit dieser Charakteristik auch als Signale mit Chirp-Effekt bezeichnet. Bei bekannter Frequenz aller cos-Schwingungen und bekannten Startphasen lässt sich für den Fachmann aus einem Signalverlauf B das Frequenzspektrum errechnen, auch wenn die Amplituden "a_i" der einzelnen harmonischen Schwingungen unbekannt sind, da diese die Messgröße darstellen. Bei frequenzmäßiger Kodierung von Anteilen des elektromagnetischen Spektrums (z.B. mittels räumlichen Lichtmodulators oder direkt mittels Ansteuermodule) und Nutzung einer entsprechend synchronisierten Kamera erfolgt die Aufnahme eines Bilderstapels nach einem der oben beschriebenen Ausführungsbeispiele. Aus diesem Bilderstapel kann für jeden Bild-Messpunkt ein Signalverlauf im Zeitbereich gebildet werden, aus dem ein Spektrum über der Frequenz f mit f in Hz berechnet werden kann. Da im Verfahren jedem Bereich einer Wellenzahl k mit k in 1/cm im gesuchten elektromagnetischen Spektrum eine Modulationsfrequenz f eindeutig zugeordnet ist, erfolgt schließlich die Zuordnung der errechneten Intensitäten zu den Wellenzahlen k, so dass im Ergebnis das gesuchte elektromagnetische Spektrum als Verteilung der Intensitäten über der Wellenzahl k vorliegt.

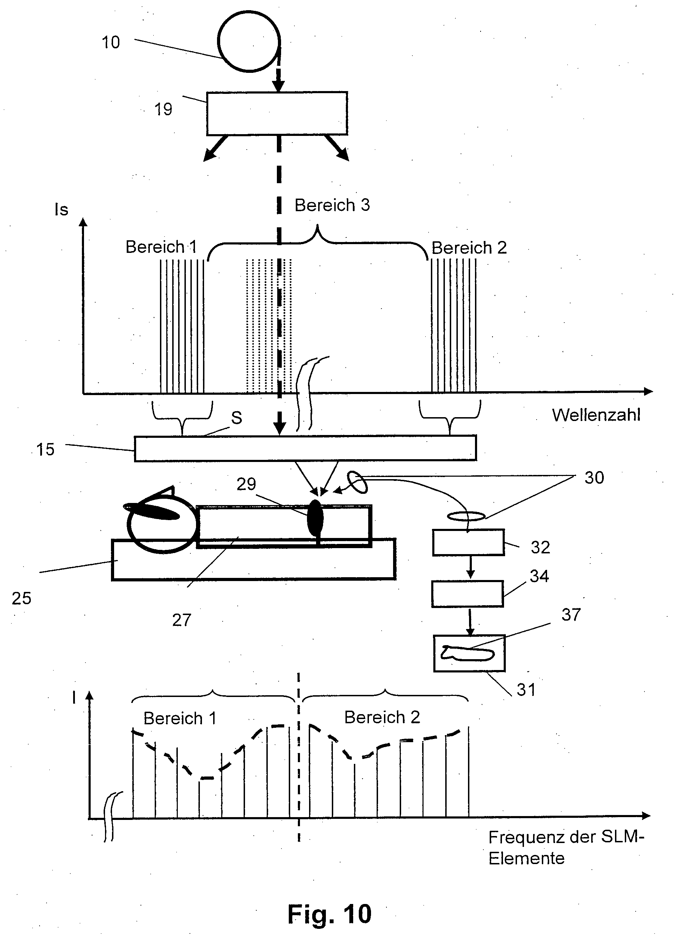

**Fig. 10** zeigt schematisch eine Bildgebungs- und/oder Messvorrichtung zur Anwendung bei chirurgischen Eingriffen.

Die Vorrichtung umfasst eine brillante Lichtquelle 10, vorzugsweise eine Lichtquelle hoher räumlicher Kohärenz. Die Lichtquelle kann breitbandige Infrarotstrahlung erzeugen, insbesondere auch Infrarotstrahlung im mittleren Infrarotspektralbereich (MIR). Die Lichtquelle 10 kann z.B. eine Synchrotronlichtquelle sein. Die breitbandige Infrarotstrahlung wird dabei durch Synchrotronstrahlung mittels einer Beamline geliefert, die MIR-Strahlung vom Speicherring eines Synchrotrons extrahiert, wie z.B. in der Publikation von Giuseppe Bellisola, Claudio Sorio, "Infrared spectroscopy and microscopy in cancer research and diagnosis", Am J Cancer Res 2012;2(1): 1-21 www.ajcr.us /ISSN:2156-6976/ajcr0000085 [103] beschrieben. Alternativ kann die Lichtquelle mehrere im MIR strahlende Laser umfassen.

Die Strahlung wird mittels hier nicht dargestellter optischer Mittel einer Vorrichtung zur hochaufgelösten spektralen Zerlegung 19 zugeführt. Die Vorrichtung zur hochaufgelösten spektralen Zerlegung 19 kann gemäß Fig. 1 mit Beugungsgittern 12 und 18 in Form eines Spektrometers mit präziser Wellenzahl-Kalibrierung aufgebaut sein. Die Vorrichtung zur hochaufgelösten spektralen Zerlegung 19 kann z.B. ein hochauflösendes Gitter-Spektrometer klassischer Bauart sein.

Vorzugsweise werden gezielt bestimmte Spektralbereiche aus dem von der Quelle emittierten Licht zur weiteren Adressierung ausgewählt. Bei dem in Fig. 10 dargestellten Beispiel werden zwei Spektralbereiche ausgewählt: Bereich 1 und Bereich 2. Die Vorrichtung zur hochaufgelösten spektralen Zerlegung 19 liefert physikalisch auch alle dazwischen liegenden schmalen Spektral-Banden sowie - je nach Auslegung - auch spektrale Bereiche ober- und unterhalb der adressierten schmalen Spektralbänder. Die nicht adressierten schmalen Spektralbänder und Spektral-Bereiche ober- und unterhalb der adressierten Spektralbänder und Spektralbereiche können mittels geeigneter Mittel herausgefiltert und vom weiteren Strahlengang in Richtung Patient bestmöglich ausgeschlossen werden. So können die nicht ausgewählten Spektralbereiche (z.B. Bereich 3 in Fig. 10) z.B. in Lichtfallen, Absorber, etc. gelenkt (oder "dunkelgeschaltet") werden.

Jeder der beiden ausgewählten Spektralbereiche 1 und 2 umfasst jeweils mehrere einzelne Spektralkomponenten (z.B. in Form von schmalen Spektral-Banden). Die Strahlung von der brillanten Lichtquelle 10 hoher räumlicher Kohärenz kann beispielsweise in die folgenden Spektralkomponenten spektral zerlegt werden:

Bereich 1:

1078,0 cm$^{-1}$
1078,5 cm$^{-1}$
1079,0 cm$^{-1}$
1079,5 cm$^{-1}$
1080,0 cm$^{-1}$
1080,5 cm$^{-1}$
1081,0 cm$^{-1}$
1081,5 cm$^{-1}$
1082,0 cm$^{-1}$

Bereich 2:

1234,5 cm$^{-1}$
1235,0 cm$^{-1}$
1235,5 cm$^{-1}$
1236,0 cm$^{-1}$
1236,5 cm$^{-1}$
1237,0 cm$^{-1}$
1237,5 cm$^{-1}$
1238,0 cm$^{-1}$

Die obigen Bereiche 1 und 2 stellen zwei aus der Literatur bekannte "Krebsmarkerbanden" dar (siehe z.B. P. Ventkatachalam, L. Lakshmana Rao, N. Krishna Kumar, Anupama Jose, Shaiju S. Nazeer: "Diagnosis of Breast Cancer based on FT-IR-Spectroscopy." in AIP Conf. Proc. 1075, 144 (2008) doi 10.1063/1.3046195). Je nach Anwendung können jedoch andere Spektralbereiche und/oder andere Spektralkomponente ausgewählt werden. So wird z.B. im Fachartikel von So Yeong Lee, Kyong-Ah Yoon, Soo Hwa Jang, Erdene Ochir Ganbold, Dembereldorj Uuriintuya "Infrared spectroscopy characterization of normal and lung cancer cells originated from epithelium." in Journal of Veterinary Science. J. Vet. Sci. (2009), 10(4), 299-304, DOI: 10.4142/jvs.2009.10.4.299, berichtet, dass der Spektralbereich um 970 cm$^{-1}$ zur Detektion von Lungenkrebs geeignet ist.

Ebenfalls ist es möglich, eine größere Anzahl von Spektralbereichen und/oder Spektralkomponenten auszuwählen. So können bis zu 100 spektrale Krebsmarker aus der Breitband-Strahlung der Lichtquelle im mittleren Infrarot, beispielsweise von 900 cm$^{-1}$ bis 1400cm$^{-1}$, angesteuert werden. Die Auswertung einer größeren Anzahl von Spektralbereichen und/oder Spektralkomponenten kann die Genauigkeit der Messung bzw. die Treffsicherheit erhöhen. In der Regel reicht in vielen Fällen eine relativ geringe Anzahl der adressierten schmalen Spektralkomponenten aus (z.B. unter 64).

Die "spektralen Krebsmarker" bzw. "Krebsmarkerbanden" können z.B. zeitnah vom Patienten unter definierten Bedingungen in einer chirurgischen, invasiven Voruntersuchung von Geweben verschiedener Zustände (benign, premalign bis malign) gewonnen und mittels histopathologischer Gewebe-Untersuchungen eindeutig in mehrere Klassen eingruppiert werden. Die "spektralen Krebsmarker" können z.B. in einer Datenbank bzw. im Speicher eines Zentralrechners 34 gespeichert werden. Die "spektralen Krebsmarker" stehen vorzugsweise in der chirurgischen Operation im Zentralrechner 34 automatisiert oder auf Zuruf an Experten im Hintergrund an dem Zentralrechner zum Abgleich mit unbekanntem Gewebe unter Bedingungen einer chirurgischen Operation zur Verfügung.

Die spektrale Aufspaltung der jeweils ausgewählten Spektralbereiche erfolgt in der Ebene S, die auch eine etwas gekrümmte Fläche sein kann. Fig. 10 zeigt die Verteilung der Intensität $I_S$ in der Fläche der Zerlegung (Ebene S) als Funktion der Wellenzahl.

In der Ebene bzw. Fläche der spektralen Aufspaltung der Vorrichtung zur hochaufgelösten spektralen Zerlegung 19 ist ein SLM-Block 15 angeordnet. Der SLM-Block 15 kann zwei (oder mehrere) in der Ebene bzw. Fläche S räumlich voneinander getrennte SLMs umfassen. In diesem Beispiel wird jedem der ausgewählten Bereiche (in dem vorliegenden Beispiel Bereiche 1 und 2) je ein räumlicher Lichtmodulator (SLM) zugeordnet, welcher für den MIR Spektralbereich z.B. mittels einer Vergoldung der Elemente optimiert ist. Alternativ können weit voneinander entfernte Bereiche auf einem einzigen SLM verwendet werden. Das hängt insbesondere von der Differenz der Wellenzahlen der adressierten Bereiche ab. Um das Licht von zwei lateral merklich getrennten Bereichen auf einen einzigen SLM zu leiten bzw. lenken, können geeignete, vorzugsweise miniaturisierte Spiegel-Anordnungen verwendet werden.

Vorzugsweise erfolgt die spektrale Zerlegung (Auflösungsvermögen) derart, dass jeder o.g. schmale Spektralbande bzw. jeder Spektralkomponente ihr eigenes harmonisch oszillierendes Element des SLM eindeutig zugewiesen werden kann. Der zur Verfügung stehende Frequenzbereich des SLM kann bei der Ansteuerung des SLM in einzelne Frequenzbereiche entsprechend aufgeteilt werden.

In einem Beispiel umfasst jeder der Bereiche 1 und 2 (z.B. die Bereiche um jeweils 1080 cm$^{-1}$ und 1236 cm$^{-1}$, die als "spektrale Krebsmarker" bekannt sind) 8 unterschiedliche Spektralkomponenten und es werden entsprechend nur 8 Elemente der SLMs jeweils "hellgeschaltet". In diesem Beispiel kann sich die Schwerpunktwellenlänge von SLM-Element zu SLM-Element um jeweils 0,5 cm$^{-1}$ verschieben. Die einzelnen Spektralkomponenten können z.B. auf die Modulationsfrequenzen:

20Hz, 22Hz, 24Hz, 26Hz, 28Hz, 30Hz, 32Hz, 34Hz, 36Hz, 38Hz, 40Hz, 42Hz, 44Hz, 46Hz, 48Hz, 50Hz aufgeteilt werden.

Nach dem Start des Messvorgangs/Untersuchungsvorgangs von Organgewebe oszillieren die SLM-Elemente der SLMs des SLM-Blocks 15, beispielsweise von 20 Hz bis 50 Hz, jeweils mit einer um 2 Hz höheren Frequenz von einem SLM-Element zu seinem benachbarten SLM-Element. Zwischen dem 8. SLM-Element und dem 9. SLM-Element des SLM-Blocks 15 kann ebenfalls eine um 2 Hz höhere Oszillations-Frequenz eingestellt werden. Das ist jedoch nicht zwingend erforderlich. Ferner können die Startphasen der Oszillation unterschiedlich verteilt sein. Die Frequenzen, die Schwerpunktwellenlänge und gegebenenfalls die Startphasen auf jedem SLM-Element sind im Zentralrechner 34 abgelegt.

Jede Spektralkomponente wird durch ein Element des räumlichen Lichtmodulators mit der ihm zugewiesenen Frequenz moduliert. Die Spreizung im Frequenzbereich der Modulationen ist folglich sehr viel größer als im Bereich der physikalischen Wellenzahlen. Das geschieht jedoch unter Inkaufnahme einer relativ schlechten Energie-Effizienz. Deshalb ist in diesem Fall Verwendung einer brillanten Lichtquelle notwendig. In der Summe erreicht nur vergleichsweise wenig der von der Lichtquelle ausgestrahlten MIR-Strahlung den Patienten- und zwar die Strahlung, welche z.B. aufgrund Vorabuntersuchungen mit der Errechnung bzw. Aufstellung patientenbezogener "Krebsmarker" zur Detektion von Krebs, etc. als am besten geeignet bestimmt wurde. Die brillante Quelle kann dabei unter "Volllast" laufen, ohne dass der Patient unnötig belastet wird.

Die adressierte multispektrale Infrarot-Messstrahlung wird zum untersuchten Organgewebe 29 des auf dem Operationstisch 25 liegenden Patienten 27 geleitet. Die optischen Mittel zum Einbringen der Infrarot-Messstrahlung in das Organ-Gewebe sind in Fig. 10 nicht dargestellt. Es können beliebige geeignete optische Mittel, z.B. in Form einer Mess-Sonde, eingesetzt werden. Abbildungsoptik 30 bringt die zurückkommende MIR-Strahlung auf einen Detektor. Der Detektor kann ein so genannter "Focal plane Detektor" sein, z.B. eine MIR-Kamera 32. Alternativ kann der Detektor ein Ein-Punkt Detektor sein, z.B. ein gekühlter hochempfindlicher Quecksilber-Cadmium-Tellurid-Detektor für Strahlung im MIR sein, so dass nur ein kleiner Fleck im Gewebe detektiert wird. Der Quecksilber-Cadmium-Tellurid-Detektor kann oszillierende Strahlung detektieren, die im Bereich von bis zu einigen 100 Hz oder auch mehr liegen kann.

In diesem Fall kann ein Bild des untersuchten Organs durch Scannen gewonnen werden.

Mittels der MIR Kamera 32 (oder anderer geeigneter Detektoren) wird ein Bilderstapel aufgenommen. Wird z.B. mit 16 diskreten Frequenzen 1 Sekunde lang mit einer Bildfrequenz von 120 Bildern pro Sekunde gemessen und ein Bilderstapel von 120 Bildern aufgenommen, kann anhand einer Lock-in-Detektion die Intensität/Energie in der Schwingung einer jeden einzelnen Frequenz der 16 Frequenzen sicher bestimmt bzw. berechnet werden. Die AnfangsPhasen können dabei unterschiedlich sein. Das Abtast-Theorem für die Signal-Abtastung ist somit erfüllt und die einzelnen Oszillationen sind trennbar, z.B. mittels Lock-in-Detektion, schneller Fourier-Transformation (FFT), etc..

Da die Lock-in-Detektion, FFT Analyse, etc. nur auf die wenigen (z.B. 16) adressierten Frequenzen angesetzt wird, kann das Messverfahren sehr schnell ablaufen und trotzdem eine hinreichende Genauigkeit bzw. Zuverlässigkeit erzielen. Eine größere Anzahl von unterschiedlichen adressierten Spektralkomponenten bzw. Frequenzen kann die Genauigkeit und die Aussagekraft der Messung verbessern, kann jedoch die Messdauer erhöhen. In der Regel genügen 256 adressierte Frequenzen bzw. Spektralkomponenten, um eine Ensemble von Krebsmarkern (z.B. 32) spektral abzudecken und eine hinreichend hohe Aussagekraft zu erreichen.

Fig. 10 zeigt die vom Rechner 34 aus MIR-Kamerabild-Pixel errechnete Intensität I für die beiden Spektralbereiche 1 und 2 als Funktion der Frequenz der SLM-Elemente bzw. der Modulationsfrequenz. Die ermittelte Intensität ermöglicht - nach entsprechender Kalibrierung unter Zuhilfenahme von Referenzmessungen - einen präzisen Rückschluss auf den Grad der Absorption bei jeder Spektralkomponente der o. g. Bereiche 1 und Bereich 2. Damit kann das Verhältnis der Absorptionen hinreichend genau bestimmt werden.

Insbesondere lassen sich allein aus dem Verhältnis der Intensitäten der beiden Bereiche 1 und 2 Rückschlüsse bezüglich der untersuchten Gewebe ziehen. Praktisch wird jedoch in der Regel eine größere Anzahl von Spektralanteilen adressiert, also ein in der Regel komplexes Wavelet, um möglichst belastbare Aussagen, vorzugsweise in Operations-Echtzeit, über den Zustand von Organgewebe mit verantwortbaren Entscheidungen für die Durchführung einer chirurgischen Operation gewinnen zu können. Dabei können auch jeweils unterschiedliche Wavelets nacheinander adressiert werden, welche speziell an den Gewebe-Typen "benign", "premalign" und "malign" sowie weitere Unterteilungen vorab gewonnen wurden. Durch Korrelationstechniken mit abgespeicherten Referenspektren lassen sich belastbare Aussagen gewinnen.

Belastbare Aussagen lassen sich insbesondere dann gewinnen, wenn eine Vielzahl von patientenbezogenen Daten (Spektraldaten und weitere, auch multimodale Daten), welche unter klar definierten Randbedingungen und zeitnah gewonnen wurden, vorliegen. Die vorliegenden Daten stellen dann die Referenz, z.B. als Klassen-Bibliothek für die Gewebe-Klassifizierung, auch histopathologisch abgesichert, für unter OP-Bedingungen gewonnene Spektraldaten dar. Ziel ist, ggf. auf die histopathologische Absicherung unter den Bedingungen einer chirurgischen Operation verzichten zu können.

Dem Chirurgen-Team kann in der Operation beispielsweise eine Karte 37 der räumlichen Verteilung der unterschiedlichen Gewebetypen auf einem Monitor 31 gezeigt werden. Im einfachsten Fall wird die Information beim optischen Antasten von Gewebe in der chirurgischen Operation mittels optischer Mittel in eine "Krebs Ja/Nein"-Entscheidung transformiert.

Der oben beschriebene Ansatz der selektiven Frequenz-Spreizung ist auch auf mehrere Bereiche ("Krebsmarkerbanden") erweiterbar. Wie oben beschrieben ist es nicht notwendig, in jedem Fall für jeden Bereich zwingend ein neues SLM zu verwenden.

Ein anderer Ansatz stellt das zeitsequentielle Wellenlängen-Durchstimmen mittels SLM in einer Vorrichtung zur hochaufgelösten spektralen Zerlegung dar. Es kommt dann nur eine einzige Schmalband-Strahlung zur Anwendung. Da dieser Ansatz eine besonders hohe Brillanz der Strahlung erfordert, ist in der Regel dieser Ansatz dem Ansatz mit mehreren Schmalband-Linien hinsichtlich des erreichbaren Signal-Rausch-Verhältnisses unterlegen.

Weitere Beispiele:

1. Ein Verfahren zur adaptiven hyperspektralen Bildgebung und/oder zur Erfassung des Abstands, des 2D- oder 3D-Profils mittels Spektroskopie oder auch zur spektralen Modulation von Strahlung über Raum und Zeit mit Dynamik-Reduktion, insbesondere auch für medizinische Anwendungen mit den folgenden Mitteln:

- entweder einer multispektralen Quelle elektromagnetischer Strahlung 10 und dieser nachgeordneten wellenlängen-dispersiven optischen Mitteln 12 und mindestens einem elektrisch steuerbaren, räumlichen Lichtmodulator 14;
- oder einem Ensemble oder einem Array von monochromatischen oder quasi-monochromatischen Quellen 1 1i, i = 1, 2, ... elektromagnetischer Strahlung mit vorbestimmt voneinander jeweils verschiedener Emissions-Schwerpunkt-Wellenlänge $\lambda_1$, $\lambda_2$, ... oder jeweils verschiedenem Emissions-Schwerpunkt-Wellenlängenband mit einem oder mehreren zugeordneten elektronischen Ansteuermodulen 20 für die Quellen 11i,

- und einem gerasterten Detektor 32 mit einem zugeordneten Rechner oder Rechner-System 34 oder mit einem gerasterten Detektor-System mit mindestens einem zugeordneter Rechner oder Rechner-System 34,

wobei das Verfahren ist gekennzeichnet dadurch, dass

entweder

- bei der multispektralen Lichtquelle 10 eine spektrale Aufspaltung in einem flächigen oder räumlichen Bereich mittels der nachgeordneten wellenlängen-dispersiven Mittel 12 durchgeführt wird und somit entweder mindestens eine laterale Wellenlängen-Achse (WA; $\lambda$-Achse) besteht oder ein vorbestimmt lateral strukturierter Bereich von Intensitäten mit unterschiedlichen Wellenlängen besteht und in dem flächigen oder räumlichen Bereich mit einem oder mehreren steuerbaren räumlichen Lichtmodulatoren 14 dabei lateral eine unterschiedliche Beaufschlagung der elektromagnetischen Strahlung durch einen vorbestimmt gesteuerten Grad der Reflexion und/oder Grad der Transmission und/oder Grad der Absorption mit einer vorbestimmt gesteuerten zeitlichen Modulation, auch aperiodisch, erfolgt und für die - in der physikalischen Wellenlänge der elektromagnetischen Strahlung - unterschiedlichen Anteile auch jeweils eine in der Grundfrequenz oder in einem vergleichsweise schmalen Grundfrequenzband (wobei auch Oberwellen entstehen können) unterschiedliche zeitliche Modulationen in einem Frequenzbereich, jedoch jeweils unterhalb einer Frequenz von 10 Megahertz für die Grundfrequenz oder für das Grundfrequenzband durchgeführt werden

- und die in der physikalischen Wellenlänge unterschiedlichen Anteile der elektromagnetischen Strahlung nach der Beaufschlagung zumindest näherungsweise räumlich zu multispektraler elektromagnetischen Strahlung mittels optischer Mittel 18 wieder zusammengesetzt werden und so ein adressiertes Spektrum elektromagnetischer Strahlung 24 gebildet ist

oder

- dass bei einem Ensemble oder einem Array von monochromatischen oder quasi-monochromatischen (diskreten oder Array-) Quellen 11 elektromagnetischer Strahlung mit vorbestimmt voneinander jeweils verschiedener Emissions-

Schwerpunkt-Wellenlänge $\lambda_1$, $\lambda_2$, ... oder Emissions-Schwerpunkt-Wellenlängenband mit einem oder mehreren zugeordneten elektronischen Ansteuermodulen, ein Frequenz-Multiplexing in einem Frequenzbereich jeweils unterhalb einer Frequenz von 10 Megahertz für die Grund-Frequenz oder für das Grund-Frequenzband durchgeführt wird, oder auch eine zeitliche aperiodische Kodierung der spektralen Kanäle vorgenommen wird, und die Strahlung jeder Emissions-Schwerpunkt-Wellenlänge dabei eine vorbestimmte Modulation erfährt, wobei auch Oberwellen entstehen können,

- und die in der physikalischen Wellenlänge unterschiedlichen Anteile der elektromagnetischen Strahlung zumindest näherungsweise räumlich zu multispektraler elektromagnetischen Strahlung 24 mittels optischer Mittel 18 zusammengesetzt werden und so ein adressiertes Spektrum elektromagnetischer Strahlung 24 gebildet ist.

Mit der wieder zusammengesetzten, multispektralen elektromagnetischen Strahlung 24 wird die Bestrahlung eines Objekts 26 oder einer Szene durchgeführt (also mit "weißem" Licht) und jeder Objektpunkt wird zumindest näherungsweise mit dem adressierten Spektrum elektromagnetischer Strahlung 24 beaufschlagt. Mittels des gerasterten Detektors 32 mit einem zugeordneten Rechner oder Rechner-System 34 oder mittels des gerasterten Detektor-Systems mit mindestens einem zugeordneter Rechner oder Rechner-System 34 erfolgt eine flächenhafte Detektion der vom Objekt 26 ausgehenden elektromagnetischen Strahlung 28. Ferner werden eine Analyse mit dem zugeordneten Rechner oder Rechner-System 34 der zeitlich modulierten Anteile in der detektierten Intensität für jedes Detektionselement des gerasterten Detektors 30; und eine Modulations-Wellenlängen-Konversion mittels vorab zumindest näherungsweise bekannter Zuordnung von einer Wellenlänge oder Schwerpunkt-Wellenlänge der elektromagnetischen Strahlung zu einer Grundfrequenz oder Sequenz der Modulation durchgeführt.

Die Modulation kann eine periodische oder aperiodische Modulation sein. Ebenfalls kann ein Chirping durchgeführt werden. Vorzugsweise wird eine Korrelation mit der aufgeprägten Modulation durchgeführt. Die Modulation kann lateral im Raum erfolgen, insbesondere kann die Modulation mit einer linearen Änderung der Modulationsfrequenz erfolgten.

Die Startphasen der einzelnen harmonischen Schwingungen, die im f-Raum, mittels angesteuertem SLM erzeugt werden, können sich vorbestimmt voneinander unterscheiden. Dabei können die Startphasen über der Frequenz f auch gemäß einem nichtlinearen Bildungsgesetz gebildet (erzeugt) sein, so dass das Summensignal, welches von den Pixeln des gerasterten Detektors registriert wird, einen signifikanten Chirp-Effekt aufweist und das Summensignal keine auffälligen Maxima aufweist. Dies ist für die Ausnutzung des gegebenen Dynamikbereiches eines Detektors von Vorteil oder es verringert die Anforderungen an die Detektordynamik von vornherein.

Vorzugsweise wird eine Mehrfachbündel- (z.B. 8 Bündel) auf eine Einzelbündel-Kopplung oder eine Mehrfachfaser- (z.B. 8 Fasern) auf eine Einzelfaser-Kopplung durchgeführt.

Vorzugsweise erfolgt der Einsatz von Fabry-Perot-Filtern zur Demodulierung der spektralen Wavelets im Frequenzraum.

Weiter bevorzugt erfolgt der Einsatz eines Frequenzkamm-Lasers als Strahlungsquelle mit geeignetem Spektrallinien-Abstand im Spektrum, wobei vorzugsweise jede Spektrallinie bei einer Abstands-, Profil- oder 3D-Messung eine eigene Tiefe im Objektraum adressiert.

2. Anordnung zur adaptiven hyperspektralen Bildgebung und/oder zur Erfassung des Abstands, des 2D- oder 3D-Profils mittels Spektroskopie oder auch zur spektralen Modulation von Strahlung über Raum und Zeit mit Dynamik-Reduktion, insbesondere auch für medizinische Anwendungen umfasst

- entweder eine multispektrale Quelle elektromagnetische Strahlung 10 und dieser Quelle 10 nachgeordneten wellenlängen-dispersiven optischen Mitteln 12 und mindestens einen elektrisch steuerbaren, räumlichen Lichtmodulator 14;

- oder ein Ensemble oder ein Array von monochromatischen oder quasi-monochromatischen Quellen elektromagnetischer Strahlung 11i, i=1,2,... mit vorbestimmt voneinander jeweils verschiedener Emissions-Schwerpunkt-Wellenlänge $\lambda_1$, $\lambda_2$, ... oder jeweils verschiedenem Emissions-Schwerpunkt-Wellenlängenband mit einem oder mehreren zugeordneten elektronischen Ansteuermodulen 20,

- und einem gerasterten Detektor 30 mit einem zugeordneten Rechner oder Rechner-System 34 oder mit einem gerasterten Detektor-System mit mindestens einem zugeordneter Rechner oder Rechner-System 34,

gekennzeichnet dadurch, dass

entweder

- bei der multispektralen Lichtquelle 10 eine spektrale Aufspaltung in einem flächigen oder räumlichen Bereich mittels der nachgeordneten wellenlängen-dispersiven Mittel 12 durchgeführt wird und somit entweder mindestens eine laterale Wellenlängen-Achse (WA; λ-Achse) besteht oder ein vorbestimmt lateral strukturierter Bereich von Intensitäten mit unterschiedlichen Wellenlängen besteht und in dem flächigen oder räumlichen Bereich mit einem oder mehreren steuerbaren räumlichen Lichtmodulatoren 14 dabei lateral eine unterschiedliche Beaufschlagung der elektromagnetischen Strahlung durch einen vorbestimmt gesteuerten Grad der Reflexion und/oder Grad der Transmission und/oder Grad der Absorption mit einer vorbestimmt gesteuerten zeitlichen Modulation, auch aperiodisch, erfolgt und für die - in der physikalischen Wellenlänge der elektromagnetischen Strahlungunterschiedlichen Anteile auch jeweils eine in der Grundfrequenz oder in einem vergleichsweise schmalen Grundfrequenzband (wobei auch Oberwellen entstehen können) unterschiedliche zeitliche Modulationen in einem Frequenzbereich, jedoch jeweils unterhalb einer Frequenz von 10 Megahertz für die Grundfrequenz oder für das Grundfrequenzband durchgeführt werden

- und die in der physikalischen Wellenlänge unterschiedlichen Anteile der elektromagnetischen Strahlung nach der Beaufschlagung zumindest näherungsweise räumlich zu multispektraler elektromagnetischen Strahlung mittels optischer Mittel 18 wieder zusammengesetzt werden und so ein adressiertes Spektrum elektromagnetischer Strahlung 24 gebildet ist oder

- dass bei einem Ensemble oder einem Array von monochromatischen oder quasi-monochromatischen (diskreten oder Array-) Quellen 11 elektromagnetischer Strahlung mit vorbestimmt voneinander jeweils verschiedener Emissions-Schwerpunkt-Wellenlänge $\lambda_1$, $\lambda_2$, ... oder Emissions-Schwerpunkt-Wellenlängenband mit einem oder mehreren zugeordneten elektronischen Ansteuermodulen, ein Frequenz-Multiplexing in einem Frequenzbereich jeweils unterhalb einer Frequenz von 10 Megahertz für die Grund-Frequenz oder für das Grund-Frequenzband durchgeführt wird, oder auch eine zeitliche aperiodische Kodierung der spektralen Kanäle vorgenommen wird, und die Strahlung jeder Emissions-Schwerpunkt-Wellenlänge dabei eine vorbestimmte Modulation erfährt, wobei auch Oberwellen entstehen können,

- und die in der physikalischen Wellenlänge unterschiedlichen Anteile der elektromagnetischen Strahlung zumindest näherungsweise räumlich zu multispektraler elektromagnetischen Strahlung 24 mittels optischer Mittel 18 zusammengesetzt werden und so ein adressiertes Spektrum elektromagnetischer Strahlung 24 gebildet ist.

Mit der wieder zusammengesetzten, multispektralen elektromagnetischen Strahlung 24 wird die Bestrahlung eines Objekts 26 oder einer Szene durchgeführt (d.h. mit "weißem" oder multispektralem Licht einer gewünschten adressierten Charakteristik) und jeder Objektpunkt wird zumindest näherungsweise mit dem adressierten Spektrum elektromagnetischer Strahlung 24 beaufschlagt. Mittels des gerasterten Detektors 32 mit einem zugeordneten Rechner oder Rechner-System 34 oder mittels des gerasterten Detektor-Systems mit mindestens einem zugeordneter Rechner oder Rechner-System 34 erfolgt eine flächenhafte Detektion der vom Objekt 26 ausgehenden elektromagnetischen Strahlung 28. Ferner werden eine Analyse mit dem zugeordneten Rechner oder Rechner-System 34 der zeitlich modulierten Anteile in der detektierten Intensität für jedes Detektionselement des gerasterten Detektors 32; und eine Modulations-Wellenlängen-Konversion mittels vorab zumindest näherungsweise bekannter Zuordnung von einer Wellenlänge oder Schwerpunkt-Wellenlänge der elektromagnetischen Strahlung zu einer Grundfrequenz oder Sequenz der Modulation durchgeführt.

Vorzugsweise sind Fabry-Perot-Filter der 3D-Messanordnung zur Demodulierung der spektralen Wavelets im Frequenzraum zugeordnet. Vorzugsweise werden 10 (oder auch mehr) diskrete Lichtquellen 11i eingesetzt und moduliert.

As Lichtquelle kommt auch ein Frequenzkamm-Lasers mit geeignetem Spektrallinien-Abstand im Spektrum zum Einsatz, wobei jede Spektrallinie eine eigene Tiefe im Objektraum adressiert.

Gegenüber einer durchstimmbaren Lichtquelle (so genannten "swept sources") haben die oben beschriebenen bzw. Bildgebungs- und Messvorrichtungen den Vorteil, dass die Strahlung des gesamten adressierten Spektralbereichs zeitgleich mit dem Objekt in optischem Kontakt ist. Dadurch ergeben sich ein besseres Signal/Rausch-Verhältnis und eine höhere Flexibilität bei der Parametrisierung. Ein weiterer Vorteil bei der Signalverarbeitung besteht in der massiven Parallelisierbarkeit, welche z.B. durch den Einsatz von so genannten Smart-Kameras oder Grafikprozessor ermöglicht wird. Des Weiteren ist es möglich, Kameras mit eher niedriger Pixelanzahl zu verwenden, die jedoch wesentlich schneller als höher-pixelige Kameras sind und eine "Echtzeit" Bildgebung bzw. Messung ermöglichen. Dies ist insbesondere ein Vorteil gegenüber dem aus der Druckschrift DE 10 2006 007 172 B4 bekannten Ansatz. Die Vielzahl möglicher Codierungen, in Verbindung mit passender Auswertung, ermöglicht ferner die Diskriminierung einer hohen Anzahl spektraler Kanäle und eine bessere Anpassung an der konkreten Anwendung. Ferner können alle optische Elemente, z.B. gekrümmte Beugungsgitter, DMDs, etc., optimal hinsichtlich ihres Wirkungsgrads genutzt werden.

Die Modulationsfrequenz kann ferner gegenüber der physikalischen Wellenlänge der elektromagnetischer Strahlung, in einem inversen Verhältnis stehen bzw. "invertiert sein". So ist es möglich die Spektralkomponente mit der kleinsten Wellenlänge sowohl mit der kleinsten Modulationsfrequenz als auch mit der größten Modulationsfrequenz zu modulieren. Dementsprechend kann die Modulationsfrequenz lateral über dem SLM entlang der Wellenachse WM "wandeln" (von kleinster zur größter Modulationsfrequenz oder umgekehrt). Die Änderung der Modulationsfrequenz kann auch entsprechend dem Verhältnis der Wellenlängen erfolgen, so dass das Spektrum nicht umgerechnet (gedehnt oder gestaucht) werden muss. Die Änderung der Modulationsfrequenz kann auch entsprechend dem Verhältnis der Wellenzahlen erfolgen, so dass das Spektrum ebenfalls nicht umgerechnet (gedehnt oder gestaucht) werden muss.

Die obigen Vorrichtungen und Verfahren können in vielen Anwendungsgebieten eingesetzt werden. Nachfolgend werden zwei Anwendungsbeispiele im Bereich Medizin beschrieben:

**Anwendungsbeispiel 1:** Anwendung einer erfindungsgemäßen Messvorrichtung als intraorale Handheld 3D-Zahn-Kamera mit chromatisch-konfokalem Ansatz

Als Licht- bzw. Strahlungsquelle kommen insbesondere eine starke SLD-Beleuchtung oder ein Weißlichtlaser in Frage (z.B. 440nm-556nm). Alternativ kann ein Frequenzkammlaser mit geeignetem Spektrallinien-Abstand im Spektrum als Licht- bzw. Strahlungsquelle verwendet werden. Vorzugsweise adressiert jede Spektrallinie eine eigene Tiefe im Objektraum. Das Licht wird vorzugsweise mittels eines optischen Fasers zu einem räumlichen Lichtmodulator (SLM) und/oder zur einer, im Objektraum angeordneten chromatisch-konfokalen Messanordnung geleitet. Als SLM kann z.B. ein 5 kHz DMDs verwendet werden. Dadurch ist es möglich, 128 oder ggf. 256 Spektralkomponenten bzw. Spektralkanäle in Echtzeit zu adressieren bzw. zu modulieren.

Mit dem modulierten bzw. adressierten multispektralen Licht erfolgt eine Punktlicht-Quellenbeleuchtung im Objektraum einer chromatisch-konfokalen Messanordnung. Das von dem Objekt (Zahn oder Zähne) reflektierte Licht wird mit einer CCD Kamera detektiert, z.B. einer 12 kHz-Kamera mit 1 Megapixel.

Die 3-D Zahnkamera weist beispielsweise eine spektrale Bildgeberrate von 16Hz auf. Dies entspricht beispielsweise auch der Rate der Bereitstellung der Punktwolke bzw. der Bereitstellung der strukturellen Objektinformationen.

Vorzugsweise ist der Kamerakopf zusammen mit dem chromatisch-konfokalen 3D-Sensor (umfassend die multispektrale Lichtquelle, den räumlichen Lichtmodulator, die chromatisch-konfokale Messanordnung und gegebenenfalls weitere optische Komponente) abgesetzt und bildet somit einen 3-D Sensorkopf. Die Lichtzuführung in den 3D-Sensorkopf erfolgt beispielsweise über Lichtwellenleiter.

Vorteile dieser Konstruktion gegenüber einer konventionellen Messanordnung mit durchstimmbarer Lichtquelle ("swept-scan" Messanordnung) sind die erhöhte Verwacklungssicherheit, da im Signal mehr über der Zeit gemittelt wird. Ein weiterer Vorteil ist, die Möglichkeit, 2-D und 3-D Bilder in Echtzeit zu erfassen.

**Anwendungsbeispiel 2:** Anwendung zur Tumor-Erkennung (Krebs)

Bei dieser Anwendung kann eine MIR-Kontinuums-Lichtquelle (z.B. mit Spektrum im mittleren Infrarotbereich von ungefähr 7 $\mu$m bis 11 $\mu$m Wellenlängenbereich) verwendet werden. Dies entspricht in Wellenzahlen etwa 910 cm$^{-1}$ bis 1430 cm$^{-1}$. Zur Anwendung kann hier eine brillante Synchrotronstrahlungsquelle mit hoher räumlicher Kohärenz kommen. Ebenfalls kann eine NIR- (nahes Infrarotspektrum) Lichtquelle eingesetzt werden.

Mittels MIR-tauglichem DMD als räumlicher Lichtmodulator (z.B. DMD mit vergoldeten Elementen, Pixel) wird eine vorgegebene (z.B. relativ geringe) Anzahl von Spektralkomponenten adressiert bzw. moduliert. So können z.B. von 2 bis 16 Spektralkomponenten adressiert werden. Vorzugsweise sind die einzelnen Spektralkomponenten schmalbändig und entsprechen den bereits vorab bestimmten oder generell bekannten "Marker-WellenlängenBereiche" des untersuchten Gewebes. Alle für Tumor-Erkennung durch Vorab-Kenntnisse irrelevanten Wellenlängenbereiche sind vorzugsweise mittels DMD dunkelgeschaltet. Dies dient der Verringerung der Belastung des untersuchten Gewebes durch eine zu hohe Intensität der am Gewebe auf- und eingebrachten elektromagnetischen Strahlung. Andererseits kann die zulässige Intensität an elektromagnetischer Strahlung für das Gewebe in hohem Maße genau durch die Wellenlängenbereiche genutzt werden, welche mit hoher Wahrscheinlichkeit signifikante Informationen über das zu untersuchende Gewebe liefern können. Durch ein "maßgeschneidertes" Spektrum der Beleuchtung hinsichtlich einer konkreten medizinischen Fragestellung kann sich vorteilhafterweise auch die Messzeit am zu untersuchenden Gewebe bei gleichem Signal/Rausch-Verhältnis verkürzen.

Das untersuchte, tumor-verdächtige Gewebe (malign) wird mit dem so adressiertem Strahlungsspektrum in optischen Kontakt gebracht. Aus den rückkommenden, detektierten spektralen Strahlungsanteilen mit den im/am Gewebe stattgefundenen Absorptionen können die Intensitäten in den entsprechenden "Marker-Wellenlängen-Bereichen" kalibriert und miteinander verrechnet werden, z.B. durch Quotientenbildung, Varianzen, Korrelationen erster bis n-ter Ableitung nach der Wellenzahl/Wellenlänge, etc., aufgrund erprobter Modelle. Nachfolgend erfolgt eine Verrechnung, Bewertung und Entscheidung über die Tumoreigenschaften. Das untersuchte Gewebe kann z.B. in eindeutig benign (0), premalign oder eindeutig malign (1) klassifiziert werden. Es ist möglich die verrechneten Bilder mit ja/nein-Vorschlag in den einzelnen Kamera-Pixeln wiederzugeben. Statt einer Darstellung der einzelnen Spektralkomponenten bzw. der einzelnen Wellenlängen mittels Farben können auch die errechneten Wahrscheinlichkeiten für Krebs (z.B. eindeutig benign=0, premalign oder eindeutig malign=1) in den jeweiligen Pixeln des dargestellten Bildes gezeigt werden. Diese können grauwert- oder farbkodiert auf einem Monitor dargestellt werden.

**Bezugszeichenliste**

| | |
|---|---|
| 10 | multispektrale Lichtquelle |
| 1 1i, i=1,2, | ...monochromatische oder quasi-monochromatiche Lichtquellen |
| 12 | Beugungsgitter |
| 14 | räumlicher Lichtmodulator (Spatial Light Modulator, SLM) |
| 15 | SLM Block |
| 18 | Beugungsgitter |
| 19 | Vorrichtung zur hochaufgelösten spektralen Zerlegung |
| 20 | Steueranordnung zur Frequenzansteuerung der einzelnen Spektralkomponenten (z.B. mittels Steuerung des räumlichen Lichtmodulators oder der einzelnen Lichtquellen) |
| 21 | Synchronizationsverbindung |
| 22 | Lichtwellenleiter |
| 24 | multispektrales Beleuchtungsstrahlenbündel |
| 25 | Operationstisch |
| 26 | Objekt |
| 27 | Patient |
| 28 | vom Objekt reflektiertes Licht |
| 30 | Abbildungsoptik |
| 32 | Kamera |
| 34 | Main-Rechner (Datenverarbeitungseinrichtung), z.B. FFT, Lock-in-Auswertung |
| 36 | Hyper- bzw. multispektrales Bild ($\lambda$, x, y) |
| 37 | Karte der räumlichen Verteilung unterschiedlicher Gewebetypen |
| 38 | Hyper- bzw. multispektrales spektrales Bild (z,x,y) |
| 40 | Chromatisch-konfokale Messeinrichtung |
| 42 | Abbildungsobjektiv |
| 44 | Diffraktiv-optisches Element (DOE) für chromatische Tiefenaufspaltung |
| 46 | System für Punktbild-Erzeugung und konfokaler Diskriminator mit Abbildungsstufe |
| 50 | Beleuchtungsvorrichtung (multispektrale Lichtquelle mit adressierbaren Spektrum); |
| 52 | Monomode-Faser |
| 53 | Multimode-Faser |
| 54,58 | Linsen |
| 55 | Kollimatorlinse |
| 56 | gerastetes, flächiges Array von Mikrolinsen und jeweils den Foki der Mikrolinsen zugeordneten Pinholes |
| 60 | Strahlteiler |
| 61 | Interferometerstrahlteiler |
| 62 | Diffraktives optisches Element |
| 64 | Abbildungsobjektiv |
| 68 | Spiegel |

70        vom Objekt reflektiertes Licht

72        zweites Arrays von Mikrolinsen und jeweils den Foki der Mikrolinsen zugeordneten Pinholes mit zugeordneter Abbildungsstufe zur konfokalen Diskriminierung (optional)

74        Prisma

76        Abbildungsoptik

80        spektrometrische Anordnung

81        Objektelement

82        Objektelement

84        Referenzspiegel

91        Pixel auf der Kamera 32 mit Bildpunkt vom Objektelement 81

92        Pixel auf der Kamera 32 mit Bildpunkt vom Objektelement 82

101       Wavelet zugehörig dem Objektelement 81

102       Wavelet zugehörig dem Objektelement 82

**Patentansprüche**

1. Vorrichtung zur multi- oder hyperspektralen Bildgebung, umfassend

    eine Beleuchtungseinrichtung (50) zum Erzeugen von multi- oder hyperspektralem Beleuchtungslicht mit adressierbarem Spektrum;

    eine Bildaufnahmeeinrichtung, welche ausgelegt ist, eine zeitliche Abfolge von zwei-dimensionalen Bildern eines mit dem multispektralen Licht beleuchteten Objekts (26) zu erfassen, umfassend zumindest einen gerasterten, zweidimensionalen Detektor (32) mit mehreren Detektorelementen, welcher ausgelegt ist, die Intensität zumindest eines Teils des von dem Objekt (26) kommenden Lichts (28; 70) zu detektieren;

    eine Bildauswerteeinrichtung (34), welche ausgelegt ist, die Anteile der einzelnen Spektralkomponenten durch eine Analyse der zeitlichen Variation der von jedem Detektorelement detektierten Intensität zu ermitteln und anhand der ermittelten Anteile der einzelnen Spektralkomponenten, ein multi- oder hyperspektrales Bild (36, 38) des Objekts (26) zu erstellen,

    wobei die Beleuchtungsvorrichtung umfasst:

    eine multispektrale Lichtquelle;

    eine Modulationseinrichtung, welche ausgelegt ist, die einzelnen Spektralkomponenten der multispektralen Lichtquelle zeitlich, mit jeweils voneinander unterschiedlichen Modulationsfrequenzen, Modulationsfrequenzbereichen oder Modulationssequenzen zu modulieren, wobei

        (i) die multispektrale Lichtquelle zumindest eine Lichtquelle (10) mit einem kontinuierlichen, quasi-kontinuierlichen oder Frequenzkamm-Spektrum und wellenlängendispersiven Mitteln (12) zur spektralen Aufspaltung des von der Lichtquelle (10) emittierten Lichts in mehreren, räumlich voneinander getrennten Spektralkomponenten mit jeweils unterschiedlichen Wellenlängen $\lambda_1$, $\lambda_2$, ..., $\lambda_n$ oder Wellenlängenbändern umfasst, und

        die Modulationseinrichtung mindestens einen elektrisch steuerbaren, räumlichen Lichtmodulator (14), welcher ausgelegt ist, die einzelnen Spektralkomponenten zeitlich zu modulieren umfasst; oder

        (ii) die multispektrale Lichtquelle zumindest ein Ensemble oder Array von monochromatischen oder quasi- monochromatischen Lichtquellen (11i) zum Emittieren von Licht mit voneinander jeweils verschiedenen Emissions-Wellenlängen $\lambda_1$, $\lambda_2$, ..., $\lambda_n$ oder Emissions- Wellenlängenbändern umfasst; und

        die Modulationseinrichtung mehrere, der einzelnen monochromatischen oder quasi-monochromatischen Lichtquellen (11i) zugeordnete elektronische Ansteuermodule (20) umfasst, welche ausgelegt sind, das von der jeweiligen monochromatischen oder quasi-monochromatischen Lichtquelle (11i) emittierte Licht zeitlich zu modulieren; und

    wobei

    die Beleuchtungsvorrichtung ferner optische Mittel (18) umfasst, welche ausgelegt sind, die einzelnen modulierten Spektralkomponenten der multispektralen Lichtquelle zusammenzusetzen, so dass diese im Wesentlichen räumlich miteinander überlappen, um das multi- oder hyperspektrale Beleuchtungslicht (24) mit adressierbarem Spektrum zu bilden, **dadurch gekennzeichnet, dass** die Modulationsvorrichtung ausgelegt ist, die Startphasen der Modulationen der einzelnen Spektralkomponenten bezogen auf einem Startzeitpunkt der Beleuchtung des gerasterten Detektors (32) stetig fallend oder stetig steigend festzulegen.

2. Vorrichtung gemäß Anspruch 1, wobei die zeitliche Modulation der einzelnen Spektralkomponenten periodisch oder aperiodisch ist.

3. Vorrichtung gemäß einem der vorangegangenen Ansprüche, wobei die Modulationsvorrichtung ausgelegt ist, ein Frequenz-Chirping oder eine zeitliche Variation der Amplituden der Modulationen der einzelnen Spektralkomponenten durchzuführen.

**4.** Vorrichtung gemäß einem der vorangegangenen Ansprüche, wobei die Modulationsvorrichtung ausgelegt ist, die Modulationsfrequenz der einzelnen Spektralkomponenten linear zu ändern.

**5.** Vorrichtung gemäß einem der vorangegangenen Ansprüche umfassend ferner Mittel, die ausgelegt sind, das von der Lichtquelle (10) mit dem kontinuierlichen, quasi-kontinuierlichen oder Frequenzkamm-Spektrum emittierte Licht oder das von den einzelnen monochromatischen oder quasi- monochromatischen Lichtquellen (11i) emittierte Licht spektral zu filtern.

**6.** Vorrichtung gemäß einem der vorangegangenen Ansprüche, wobei die Bildauswerteeinrichtung (34) ausgelegt ist, für jedes Detektorelement

eine Frequenzanalyse der zeitlichen Variation der detektierten Intensität durchzuführen, und eine Modulations-Wellenlängen-Konversion mittels einer Zuordnung der ermittelten Modulationsfrequenzen zu einer bestimmten Grundfrequenz oder einem bestimmten Grundfrequenzbereich oder einer bestimmten Modulationssequenz der einzelnen Spektralbereiche durchzuführen.

**7.** Vorrichtung gemäß einem der vorangegangenen Ansprüche, wobei die Bildauswerteeinrichtung (34) ausgelegt ist,

eine Fourier-Analyse, eine FFT-Analyse, eine Waveletanalyse oder eine Lock-in-Detektion der von jedem Detektorelement detektierten Intensität durchzuführen; oder eine Korrelation der anhand der detektierten Intensität ermittelten Modulationen mit den von der Modulationsvorrichtung durchgeführten Modulationen der Spektralkomponenten durchzuführen.

**8.** Vorrichtung gemäß einem der vorangegangenen Ansprüche umfassend ferner eine Synchronisationseinrichtung (21), welche ausgelegt ist, die Modulation der einzelnen Spektralkomponenten durch die Modulationseinrichtung und die Bildaufnahme durch die Bildaufnahmeeinrichtung (34) zu synchronisieren.

**9.** Vorrichtung gemäß einem der vorangegangenen Ansprüche umfassend ferner mehrere Fabry-Perot-Filter zum Demodulieren der spektralen Wavelets im Frequenzraum.

**10.** Multi- oder hyperspektrale Messvorrichtung zur Distanzmessung oder zur Topographiemessung eines Objekts mittels Spektroskopie, umfassend

eine Vorrichtung zur multispektralen Bildgebung gemäß einem der vorangegangenen Ansprüche; und ein chromatisch konfokales System (40), ein chromatisches Triangulationssystem, ein Spektral-Interferometer, ein Fluoreszenzmikroskop oder ein Multiphotonenmikroskop.

**11.** Verfahren zur multi- oder hyperspektralen Bildgebung eines Objekts (26), umfassend:

Erzeugen von multi- oder hyperspektralem Beleuchtungslicht mit adressierbarem Spektrum; Beleuchten des Objekts (26, 26a) mit dem multi- oder hyperspektralen Beleuchtungslicht; Detektieren einer zeitlichen Abfolge von zweidimensionalen Bildern des beleuchteten Objekts (26) mittels eines gerasterten, zweidimensionalen Detektors (32) mit mehreren Detektorelementen, wobei der Detektor ausgelegt ist, die Intensität zumindest eines Teils des von dem Objekt (26) kommenden Licht zu detektieren; Ermitteln der Anteile der einzelnen Spektralkomponenten mittels einer pixelweisen Analyse der zeitlichen Variation der von jedem Detektorelement detektierten Lichtintensität und Erstellen eines multi- oder hyperspektralen Bilds (36, 38) des Objekts (26, 26a) anhand der ermittelten Anteile der einzelnen Spektralkomponenten, wobei das Erzeugen von multi- oder hyperspektralem Beleuchtungslicht mit adressierbarem Spektrum (24) umfasst:

Erzeugen von multispektralem Licht; zeitliches Modulieren der einzelnen Spektralkomponenten des multispektralen Lichts mit jeweils voneinander unterschiedlichen Modulationsfrequenzen, Modulationsfrequenzbereichen oder Modulationssequenzen, wobei

(i) das Erzeugen von multispektralem Licht ein spektrales Aufspalten des von einer kontinuierlichen, quasi-kontinuierlichen oder Frequenzkamm-Lichtquelle emittierten Lichts in mehreren, räumlich voneinander getrennten Spektralkomponenten mit voneinander unterschiedlichen Wellenlängen $\lambda_1$, $\lambda_2$, ..., $\lambda_n$ oder Wellenlängenbändern umfasst; und das zeitliche Modulieren der einzelnen Spektralkomponenten mittels eines elektrisch steuerbaren, räumlichen Lichtmodulators (14) erfolgt; oder

(ii) das Erzeugen von multispektralem Licht ein Emittieren von Licht mit mehreren, voneinander jeweils verschiedenen Spektralkomponenten mit voneinander unterschiedlichen Emissions-Wellenlängen $\lambda_1$, $\lambda_2$, ..., $\lambda_n$ oder Emissions- Wellenlängenbändern von einem Ensemble oder Array von mehreren monochromatischen oder quasi-monochromatischen Lichtquellen (11i) umfasst und das zeitliche Modulieren mittels elektronischen Ansteuermodulen (20), welche der einzelnen Lichtquellen (11i) zugeordnet sind, erfolgt; und

Zusammensetzen der einzelnen modulierten Spektralkomponenten des von der multispektralen Lichtquelle emittierten Lichts umfasst, so dass diese im Wesentlichen räumlich miteinander überlappen, um das um das multi- oder hyperspektrales Beleuchtungslicht (24) mit adressiertem Spektrum zu bilden, **dadurch gekennzeichnet, dass** das zeitliche Modulieren ein Festlegen der Startphasen der Modulationen der einzelnen Spektralkomponenten bezogen auf einem Startzeitpunkt einer Beleuchtung des gerasterten Detektors (32) umfasst, wobei die Startphasen stetig fallend oder stetig steigend festgelegt werden.

**12.** Verfahren nach Anspruch 11, wobei das zeitliche Modulieren der einzelnen Spektralkomponente periodisch oder aperiodisch ist.

**13.** Verfahren nach Anspruch 11, wobei das zeitliche Modulieren eine Frequenz-Chirping oder eine lineare Änderung der Modulationsfrequenz der einzelnen Spektralkomponenten oder eine zeitliche Variation der Amplituden der Modulationen der einzelnen Spektralkomponenten umfasst.

**14.** Verfahren gemäß einem der Ansprüche 11 bis 13, wobei das Ermitteln der Anteile der einzelnen Spektralkomponenten

eine Frequenzanalyse der zeitlichen Variation der detektierten Intensität; und eine Modulations-Wellenlängen-I<onversion mittels einer Zuordnung der ermittelten Modulationsfrequenzen zu einer bestimmten Grundfrequenz oder einem bestimmten Grundfrequenzbereich oder einer bestimmten Modulationssequenz der einzelnen Spektralbereiche umfasst; oder eine Fourier-Analyse, eine FFT-Analyse, eine Waveletanalyse oder eine Lock-in-Detektion der von jedem Detektorelement detektierten Intensität umfasst; oder eine Korrelation der anhand der detektierten Intensität ermittelten Modulationen mit den von der Modulationsvorrichtung durchgeführten Modulationen der Spektralkomponenten umfasst.

**15.** Verfahren gemäß einem der Ansprüche 11 bis 14, umfassend ferner Synchronisieren des Modulierens der einzelnen Spektralkomponenten und des Detektierens der zeitlichen Abfolge von zwei-dimensionalen Bildern.

**Claims**

**1.** Apparatus for multi- or hyperspectral imaging, comprising

an illumination device (50) for generating spectrum-addressable multi- or hyperspectral illumination light; an image capturing device configured to acquire a time sequence of two two-dimensional images of an object (26) illuminated with the multispectral light, comprising at least one screened, two-dimensional detector (32) having a plurality of detector elements, which is configured to detect the intensity of at least part of the light (28; 70) coming from the object (26); an image evaluation device (34) configured to determine the proportions of the individual spectral components by analyzing the temporal variation of the intensity detected by each detector element and to create, based on the determined proportions of the individual spectral components, a multi- or hyperspectral image (36, 38) of the object (26),

wherein the illumination apparatus comprises:

a multispectral light source; a modulation device configured to temporally modulate the individual spectral components of the multispectral light source with mutually different modulation frequencies, modulation frequency ranges or modulation sequences,

wherein

(i) the multispectral light source comprises at least one light source (10) with a continuous, quasi-continuous or frequency comb spectrum and wavelength dispersion means (12) for spectrally dividing the light emitted by the light source (10) into a plurality of spectral components spatially separated from one another with mutually different wavelengths $\lambda_1$, $\lambda_2$, ..., $\lambda_n$ or wavelength bands, and the modulation device comprises at least one electrically controllable, spatial light modulator (14) configured to temporally modulate the individual spectral components; or
(ii) the multispectral light source comprises at least one set or array of monochromatic or quasi-monochromatic light sources (11i) for emitting light with mutually different emission wavelengths $\lambda_1$, $\lambda_2$, ..., $\lambda_n$ or emission wavelength bands; and
the modulation device comprises a plurality of electronic control modules (20) associated with the individual monochromatic or quasi-monochromatic light sources (11i), which modules are configured to time-modulate the light emitted by the respective monochromatic or quasi-monochromatic light source (11i); and

wherein

the illumination apparatus further comprises optical means (18) which are configured to combine the individual modulated spectral components of the multispectral light source so that they overlap one another substantially spatially to form the spectrum-addressable multi- or hyperspectral illumination light (24), **characterized in that** the modulation apparatus is configured to set the start phases of the modulations of the individual spectral components to be constantly decreasing or constantly increasing in relation to a start time of illumination of the screened detector (32).

2. Apparatus according to claim 1, wherein the temporal modulation of the individual spectral components is periodic or aperiodic.

3. Apparatus according to any one of the preceding claims, wherein the modulation apparatus is configured to perform frequency chirping or temporal variation of the amplitudes of the modulations of the individual spectral components.

4. Apparatus according to any one of the preceding claims, wherein the modulation apparatus is configured to linearly change the modulation frequency of the individual spectral components.

5. Apparatus according to any one of the preceding claims, further comprising means which are configured to spectrally filter the light emitted by the light source (10) with the continuous, quasi-continuous or frequency comb spectrum or the light emitted by the individual monochromatic or quasi-monochromatic light sources (11i).

6. Apparatus according to any one of the preceding claims, wherein the image evaluation device (34) is configured, for each detector element, to

perform a frequency analysis of the temporal variation of the detected intensity, and
perform a modulation wavelength conversion by associating the determined modulation frequencies with a specific base frequency or a specific base frequency range or a specific modulation sequence of the individual spectral ranges.

7. Apparatus according to any one of the preceding claims, wherein the image evaluation device (34) is configured to

perform a Fourier analysis, FFT analysis, wavelet analysis or lock-in detection of the intensity detected by each detector element; or
perform a correlation of the modulations determined based on the detected intensity with the modulations of the spectral components performed by the modulation apparatus.

8. Apparatus according to any one of the preceding claims, further comprising
a synchronization device (21) configured to synchronize the modulation of the individual spectral components by the modulation device and the image by the image capturing device (34).

9. Apparatus according to any one of the preceding claims, further comprising a plurality of Fabry-Perot filters for demodulating the spectral wavelets in the frequency domain.

10. Multi- or hyperspectral measuring apparatus for distance measurement or for topography measurement of an object by means of spectroscopy, comprising

an apparatus for multispectral imaging according to any one of the preceding claims; and
a chromatic confocal system (40), a chromatic triangulation system, a spectral interferometer, a fluorescence microscope or a multiphoton microscope.

11. Method for multi- or hyperspectral imaging of an object (26), comprising:

generating spectrum-addressable multi- or hyperspectral illumination light;
illuminating the object (26, 26a) with the multi- or hyperspectral illumination light;
detecting a time sequence of two two-dimensional images of the illuminated object (26) by means of a screened, two-dimensional detector (32) having a plurality of detector elements, wherein the detector is configured to detect the intensity of at least part of the light coming from the object (26);
determining the proportions of the individual spectral components by means of a pixel-by-pixel analysis of the temporal variation of the light intensity detected by each detector element, and creating a multi- or hyperspectral image (36, 38) of the object (26, 26a) based on the determined proportions of the individual spectral components,

wherein the generating of spectrum-addressable multi- or hyperspectral illumination light (24) comprises:

generating multispectral light;
temporally modulating the individual spectral components of multispectral light with mutually different modulation frequencies, modulation frequency ranges or modulation sequences, wherein

(i) generating of multispectral light comprises spectrally dividing the light emitted by a continuous, quasi-continuous or frequency comb light source into a plurality of spectral components spatially separated from one another with mutually different wavelengths $\lambda_1$, $\lambda_2$; ... $\lambda_n$ or wavelength bands; and temporally modulating the individual spectral components is carried out by means of an electrically controllable, spatial light modulator (14); or
(ii) generating of multispectral light comprises emitting light with a plurality of mutually different spectral components with mutually different emission wavelengths $\lambda_1$, $\lambda_2$; ... $\lambda_n$ or emission wavelength bands by a set or an array of a plurality of monochromatic or quasi-monochromatic light sources (11i), and temporally modulating is carried out by means of electronic control modules (20), which are associated with the individual light sources (11i); and

comprises combining the individual modulated spectral components of the light emitted by the multispectral light source so that they overlap one another substantially spatially to form the spectrum-addressable multi- or hyperspectral illumination light (24),
**characterized in that** temporally modulating comprises setting the start phases of the modulations of the individual spectral components in relation to a start time of an illumination of the screened detector (32), wherein the start phases are set to be constantly decreasing or constantly increasing.

12. Method according to claim 11,
wherein the time modulation of the individual spectral components is periodic or aperiodic.

13. Method according to claim 11, wherein the temporally modulating comprises frequency chirping or a linear change in the modulation frequency of the individual spectral components or temporal variation of the amplitudes of the modulations of the individual spectral components.

14. Method according to any one of claims 11 to 13, wherein the determining the proportions of the individual spectral components comprises

a frequency analysis of the temporal variation of the detected intensity; and a modulation wavelength conversion by associating the determined modulation frequencies with a specific base frequency or a specific base frequency range or a specific modulation sequence of the individual spectral ranges; or
a Fourier analysis, FFT analysis, wavelet analysis or lock-in detection of the intensity detected by each detector element; or
a correlation of the modulations determined based on the detected intensity with the modulations of the spectral components performed by the modulation apparatus.

15. Method according to any one of claims 11 to 14, further comprising
synchronizing the modulating the individual spectral components and the detecting the time sequence of the two two-dimensional images.

**Revendications**

1. Dispositif d'imagerie multi- ou hyperspectrale, comprenant

un système d'éclairage (50) destiné à produire de la lumière d'éclairage multi- ou hyperspectrale à spectre adressable ;
un système d'enregistrement d'images, lequel est conçu pour détecter une séquence temporelle de deux images bidimensionnelles d'un objet (26) éclairé avec la lumière multispectrale, comprenant au moins un détecteur (32) bidimensionnel tramé avec plusieurs éléments détecteurs, lequel est conçu pour détecter l'intensité d'au moins une partie de la lumière (28 ; 70) venant de l'objet (26) ;
un système d'évaluation d'image (34), lequel est conçu pour déterminer les parties des divers composants spectraux par une analyse de la variation temporelle de l'intensité détectée par chaque élément détecteur et pour créer, à l'aide des parties déterminées des divers composants spectraux, une image (36, 38) multi- ou hyperspectrale de l'objet (26),

dans lequel le dispositif d'éclairage comprend :

une source de lumière multispectrale ;
un système de modulation, lequel est conçu pour moduler les divers composants spectraux de la source de lumière multispectrale dans le temps avec des fréquences de modulations, des plages de fréquences de modulation ou de séquences de modulation différentes les unes des autres respectivement,

dans lequel

(i) la source de lumière multispectrale comprend au moins une source de lumière (10) avec un spectre fréquentiel continu, quasi-continu ou en peigne et des moyens de dispersion de longueur d'onde (12) pour la division spectrale de la lumière émise par la source de lumière (10) en plusieurs composants spectraux séparés les uns des autres spatialement avec des longueurs d'ondes $\lambda_1$, $\lambda_2$, ..., $\lambda_n$ ou des bandes de longueurs d'ondes différentes respectivement, et le système de modulation comprend au moins un modulateur de lumière spatial (14) à commande électrique, lequel est conçu pour moduler dans le temps les divers composants spectraux ; ou
(ii) la source de lumière multispectrale comprend au moins un ensemble ou un réseau de sources de lumière monochromatiques ou quasi-monochromatiques (11i) pour émettre de la lumière avec des longueurs d'ondes d'émission $\lambda_1$, $\lambda_2$, ..., $\lambda_n$ ou des bandes de longueurs d'ondes d'émission respectivement différentes les unes des autres ; et le système de modulation comprend plusieurs modules de pilotage électroniques (20) associés aux diverses sources de lumière monochromatiques ou quasi-monochromatiques (11i), lesquelles sont conçues pour moduler dans le temps la lumière émise par la source de lumière monochromatique ou quasi-monochromatique (11i) respective ; et

dans lequel

le dispositif d'éclairage comprend en outre des moyens optiques (18), lesquels sont conçus pour combiner les divers composants spectraux modulés de la source de lumière multispectrale de sorte que ceux-ci se chevauchent les uns les autres de manière sensiblement spatiale pour former la lumière d'éclairage multi- ou hyperspectrale (24) à spectre adressable, **caractérisé en ce que** le dispositif de modulation est conçu pour fixer de manière systématique décroissante ou de manière systématiquement croissante les phases de démarrage des modulations des divers composants spectraux par rapport à un moment de démarrage de l'éclairage du détecteur (32) tramé.

2. Dispositif selon la revendication 1, dans lequel la modulation temporelle des divers composants spectraux est périodique ou apériodique.

3. Dispositif selon l'une quelconque des revendications précédentes, dans lequel le dispositif de modulation est conçu pour effectuer une fluctuation de fréquence ou une variation dans le temps des amplitudes des modulations des divers composants spectraux.

4. Dispositif selon l'une quelconque des revendications précédentes, dans lequel le dispositif de modulation est conçu pour modifier de manière linéaire la fréquence de modulation des divers composants spectraux.

5. Dispositif selon l'une quelconque des revendications précédentes comprenant en outre des moyens, qui sont conçus pour filtrer de manière spectrale la lumière émise par la source de lumière (10) avec le spectre continu, quasi-continu ou en peigne ou la lumière émise par les diverses sources de lumières monochromatiques ou quasi-monochromatiques (11i).

6. Dispositif selon l'une quelconque des revendications précédentes, dans lequel le système d'évaluation d'image (34) est conçu

pour effectuer une analyse de fréquence de la variation dans le temps de l'intensité détecté, et une conversion de longueurs d'ondes de modulation au moyen d'une association des fréquences de modulation déterminées à une fréquence de base définie ou à une plage de fréquences de base définie ou à une séquence de modulation définie des diverses plages spectrales pour chaque élément détecteur.

7. Dispositif selon l'une quelconque des revendications précédentes, dans lequel le système d'évaluation d'image (34) est conçu

pour effectuer une analyse de Fourier, une analyse FFT, une analyse d'ondelettes ou une détection synchrone de l'intensité détectée par chaque élément détecteur ; ou

pour effectuer une corrélation des modulations déterminées à l'aide de l'intensité détectée avec les modulations, effectuées par le dispositif de modulation, des composants spectraux.

8. Dispositif selon l'une quelconque des revendications précédentes, comprenant en outre

un système de synchronisation (21), lequel est conçu pour synchroniser la modulation des divers composants spectraux par le système de modulation et l'enregistrement d'image par le système d'enregistrement d'image (34).

9. Dispositif selon l'une quelconque des revendications précédentes, comprenant en outre plusieurs filtres de Fabry-Pérot pour démoduler les ondelettes spectrales dans le domaine fréquentiel.

10. Dispositif de mesure multi- ou hyperspectral pour la mesure de distance ou pour la mesure de topographie d'un objet par spectroscopie, comprenant

un dispositif d'imagerie multispectrale selon l'une quelconque des revendications précédentes ; et
un système à foyer commun chromatique (40), un système de triangulation chromatique, un interféromètre spectral, un microscope à fluorescence ou un microscope multiphotonique.

11. Procédé d'imagerie multi- ou hyperspectrale d'un objet (26), comprenant :

la production de lumière d'éclairage multi- ou hyperspectrale à spectre adressable ;
l'éclairage de l'objet (26, 26a) avec la lumière d'éclairage multi- ou hyperspectrale ;
la détection d'une séquence temporelle de deux images bidimensionnelles de l'objet (26) éclairé au moyen d'un détecteur (32) bidimensionnel tramé avec plusieurs éléments détecteurs, dans lequel le détecteur est conçu pour détecter l'intensité d'au moins une partie de la lumière venant de l'objet (26) ;
la détermination des parties des divers composants spectraux au moyen d'une analyse pixel par pixel de la variation dans le temps de l'intensité lumineuse détectée par chaque élément détecteur et la création d'une image multi- ou hyperspectrale (36, 38) de l'objet (26, 26a) à l'aide des parties déterminées des divers composants spectraux,
dans lequel la production de lumière d'éclairage multi- ou hyperspectrale à spectre adressable (24) comprend :

la production d'une lumière multispectrale ;
la modulation dans le temps des divers composants spectraux de la lumière multispectrale avec des fréquences de modulation, des plages de fréquences de modulation ou des séquences de modulation respectivement différentes les unes des autres, dans lequel

(i) la production d'une lumière multispectrale comprend une division spectrale de la lumière émise par une source de lumière continue, quasi-continue ou en peigne en plusieurs composants spectraux séparés spatialement les uns des autres avec des longueurs d'ondes $\lambda_1, \lambda_2 ; ... \lambda_n$ ou des bandes de longueurs d'ondes différentes les unes des autres ; et la modulation dans le temps des divers composants spectraux est réalisée au moyen d'un modulateur de lumière spatial (14) à commande électrique ; ou
(ii) la production d'une lumière multispectrale comprend une émission de lumière avec plusieurs composants spectraux respectivement différents les uns des autres avec des longueurs d'ondes d'émission $\lambda_1, \lambda_2 ; ... \lambda_n$ ou des bandes de longueurs d'ondes d'émission différentes les unes des autres par un ensemble ou un réseau de plusieurs sources de lumière monochromatiques ou quasi-monochromatiques (11i) et la modulation dans le temps au moyen de modules de pilotage électroniques (20), lesquels sont associés aux diverses sources de lumière (11i) ; et
comprend la combinaison des divers composants spectraux modulés de la lumière émise par la source de lumière multispectrale de sorte que ceux-ci se chevauchent les uns les autres de manière sensiblement spatiale pour former la lumière d'éclairage multi- ou hyperspectrale (24) à spectre adressable, **caractérisé en ce que** la modulation dans le temps comprend une fixation des phases de démarrage des modulations des divers composants spectraux par rapport à un moment de démarrage d'un éclairage du détecteur (32) tramé, dans lequel les phases de démarrage sont fixées de manière systématique décroissante ou de manière systématiquement croissante.

12. Procédé selon la revendication 11,

dans lequel la modulation dans le temps des divers composants spectraux est périodique ou apériodique.

13. Procédé selon la revendication 11, dans lequel la modulation dans le temps comprend une fluctuation de fréquence ou une modification linéaire de la fréquence de modulation des divers composants spectraux ou une variation dans le temps des amplitudes des modulations des divers composants spectraux.

14. Procédé selon l'une quelconque des revendications 11 à 13, dans lequel la détermination des parties des divers composants spectraux comprend

une analyse de fréquence de la variation dans le temps des l'intensité détectée ; et une conversion de longueurs d'ondes de modulation au moyen d'une association des fréquences de modulation déterminées en une fréquence de base définie ou en une plage de fréquences de base définie ou en une séquence de modulation définie des diverses plages spectrales ; ou comprend une analyse de Fourier, une analyse FFT, une analyse d'ondelettes ou une détection synchronisée de l'intensité détectée par chaque élément détecteur ; ou comprend une corrélation des modulations déterminées à l'aide de l'intensité détectée avec les modulations, effectuées par le dispositif de modulation, des composants spectraux.

15. Procédé selon l'une quelconque des revendications 11 à 14, comprenant en outre la synchronisation de la modulation des divers composants spectraux et de la détection de la séquence temporelle des deux images bidimensionnelles.

**Fig. 1**

Fig. 2

λ-Achse

11i

f-Achse

**Fig. 4**

18

26

24

28

22

30

32

λ1 λ2 λ3

10

11i

f-Achse

20

21

34

36

λ

Data cube (λ, x, y)

Hyperspektrales Bild

**Fig. 3**

EP 3 108 216 B1

**Fig. 5**

Fig. 6

Fig. 7

Fig. 8

Fig. 9

10

19

Is

Bereich 1

Bereich 3

Bereich 2

Wellenzahl

S

15

29

30

25

27

32

34

37

31

I

Bereich 1

Bereich 2

Frequenz der SLM-
Elemente

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006007172
- DE B4
- US 8014569 B2
- US 6031609 A1
- US 6859275 B2
- WO 2010060460 A1
- US 2005185179 A1
- DE 102006007172 B4

**In der Beschreibung aufgeführte Nicht-Patentliteratur**

- **W. R. JOHNSON.** Snapshot Hyperspectral Imaging in Ophthalmology. *Journal of Biomedical Optics,* 2007, vol. 12 (1), 014036
- **Y. WU.** *Optics Letters,* 2011, vol. 36 (14), 2692-1694
- **J. SCHWIDER ; L. ZHOU.** Dispersive interferometric profilometer. *Optics Letters,* 1994, vol. 19 (13), 995-997
- **S. CHOI.** Multi-frequency Light Source Using Spatial Light Modulator for profilometry. *CLEO-PR,* 2013
- **D. MEHTA.** *Applied Optics,* 2002, vol. 41 (19), 3874-3885
- **K. DADESH et al.** High Speed Low Noise Multiplexed Three Color Absorbance Photometrie. *33rd Annual International Conference of the IEEE EMBS, Boston Massachusetts US,* 03. August 2011, 39-42
- **GIUSEPPE BELLISOLA ; CLAUDIO SORIO.** Infrared spectroscopy and microscopy in cancer research and diagnosis. *Am J Cancer Res,* 2012, vol. 2 (1), ISSN ISSN:2156-6976/ajcr0000085, 1-21, www.ajcr.us
- **P. VENTKATACHALAM ; L. LAKSHMANA RAO ; N. KRISHNA KUMAR ; ANUPAMA JOSE ; SHAIJU S. NAZEER.** Diagnosis of Breast Cancer based on FT-IR-Spectroscopy. *AIP Conf. Proc.,* 2008, vol. 1075, 144
- **FACHARTIKEL VON SO YEONG LEE ; KYONG-AH YOON ; SOO HWA JANG ; ERDENE OCHIR GANBOLD ; DEMBERELDORJ UURIINTUYA.** Infrared spectroscopy characterization of normal and lung cancer cells originated from epithelium. *Journal of Veterinary Science. J. Vet. Sci.,* 2009, vol. 10 (4), 299-304